# EUROPEAN PATENT APPLICATION

(11) **EP 4 319 129 A1**
(43) Date of publication of application: **07.02.2024**
(21) Application number: 22774626.0
(22) Date of filing: 25.01.2022
(51) Int. Cl.: H04N 5/232

(54) **INFORMATION PROCESSING DEVICE AND METHOD, AND PROGRAM**

(30) Priority: 26.03.2021 JP 2021053890
(71) Applicant: Sony Group Corporation, Tokyo 108-0075 (JP)
(72) Inventor: NOMURA Naoki, Tokyo 108-0075 (JP)
(74) Representative: 2SPL Patentanwälte PartG mbB
(86) International application number: PCT/JP2022/002502
(87) International publication number: WO 2022/201824

(57) **Abstract**

The present technology relates to an information processing device and method, and a program that enable generation of an appropriate composition.

The information processing device determines, based on an output aspect ratio of an output image and a predetermined part aspect ratio of a predetermined part-containing area including a predetermined part of a subject determined based on an input image, whether a predetermined part composition candidate corresponding to the predetermined part is to be set as an output composition of the output image. The present technology can be applied to an imaging system.

## Description

### [Technical Field]

The present technology relates to an information processing device and method, and a program, and more particularly to an information processing device and method, and a program enabling generation of an appropriate composition.

### [Background Art]

In automatic photographing technology, there is a demand to generate an appropriate composition for subjects in various postures or positional relationships.

In response to this demand, for example, a method of controlling only the zoom magnification so as to capture all of a plurality of subjects has been proposed (see PTL 1).

### [Citation List]

### [Patent Literature]

[PTL 1]
JP 2011-130382A

### [Summary]

### [Technical Problem]

However, with the method described in PTL 1, for example, the center of the subject may deviate from the center of the composition, resulting in an unnatural composition, making it difficult to generate an appropriate composition.

The present technology has been made in view of such a situation, and enables generation of an appropriate composition.

### [Solution to Problem]

An information processing device according to one aspect of the present technology includes a composition determination unit that determines, based on an output aspect ratio of an output image and a predetermined part aspect ratio of a predetermined part-containing area of a subject determined based on an input image, whether a predetermined part composition candidate corresponding to the predetermined part is to be set as an output composition of the output image.

In one aspect of the present technology, based on the output aspect ratio of the output image and the predetermined part aspect ratio of the predetermined part-containing area including the predetermined part of the subject determined based on the input image, it is determined whether the predetermined part composition candidate corresponding to the predetermined part is to be set as the output composition of the output image.

### [Brief Description of Drawings]

[Fig. 1]

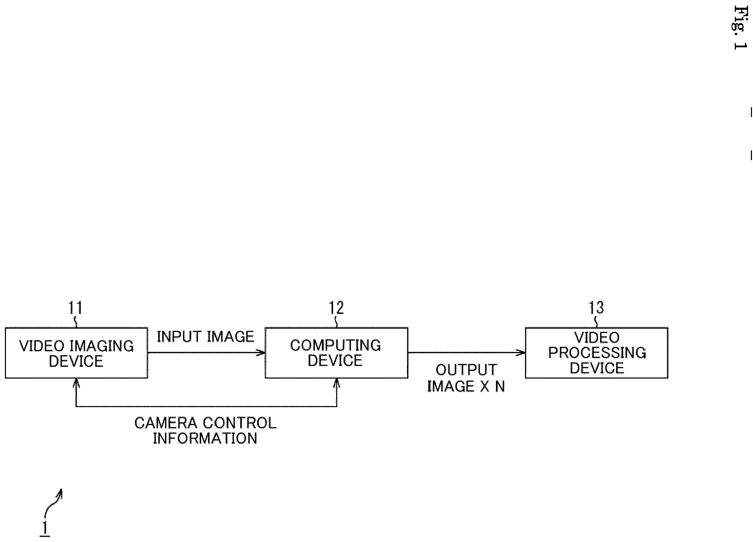

   Fig. 1 is a diagram showing a configuration example of a first embodiment of an imaging system to which the present technology is applied.
[Fig. 2]

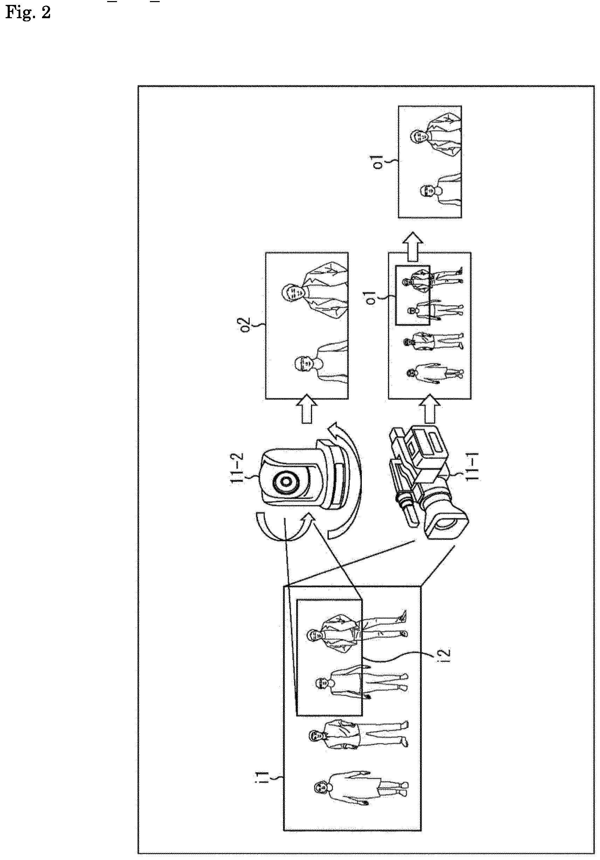

   Fig. 2 is a diagram showing an example of functions of a video imaging device.
[Fig. 3]

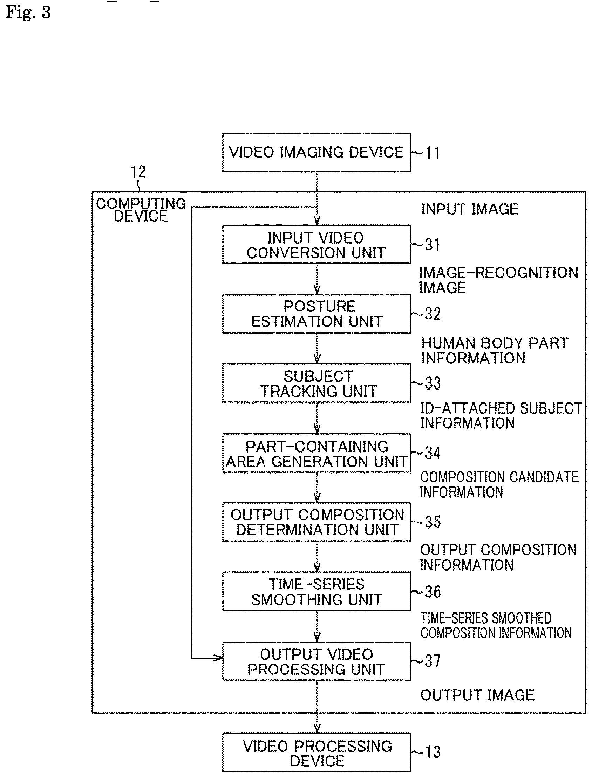

   Fig. 3 is a block diagram showing a functional configuration example of a computing device.
[Fig. 4]

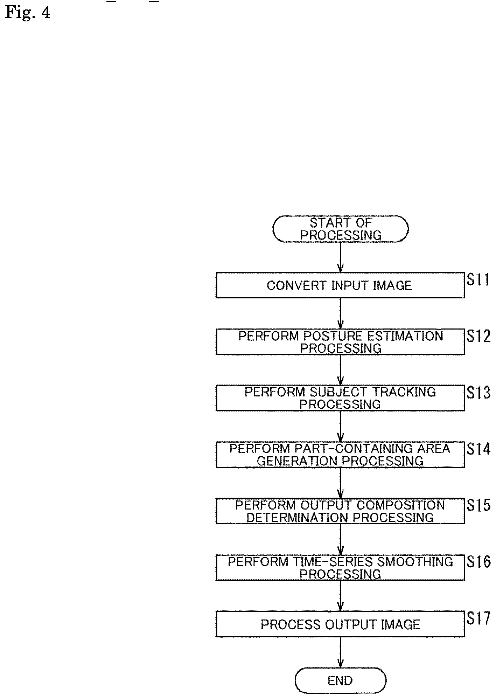

   Fig. 4 is a diagram showing an example of a part-containing area of each composition candidate.
[Fig. 5]

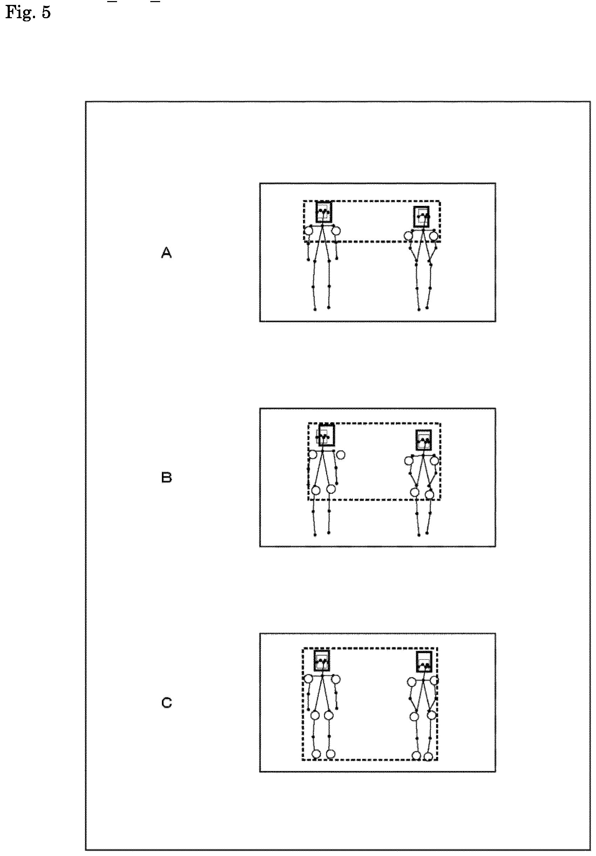

   Fig. 5 is a diagram showing an example of a part-containing area of each composition candidate.
[Fig. 6]

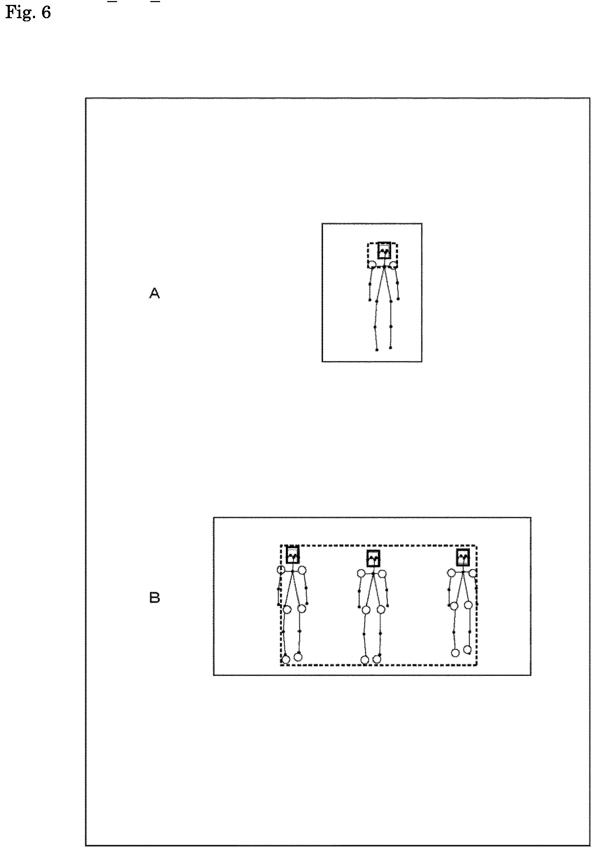

   Fig. 6 is a diagram showing an example of a part-containing area of each composition candidate.
[Fig. 7]

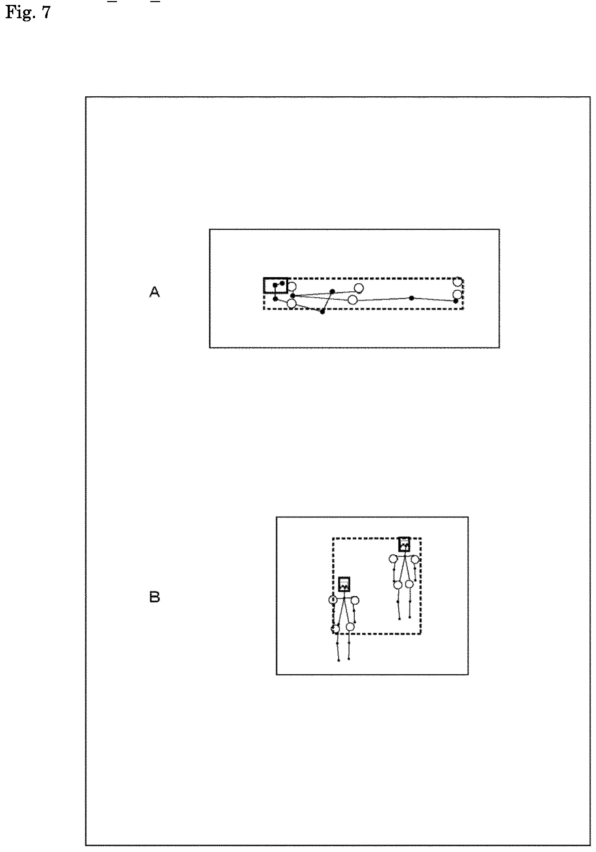

   Fig. 7 is a diagram showing an example of a part-containing area of each composition candidate.
[Fig. 8]

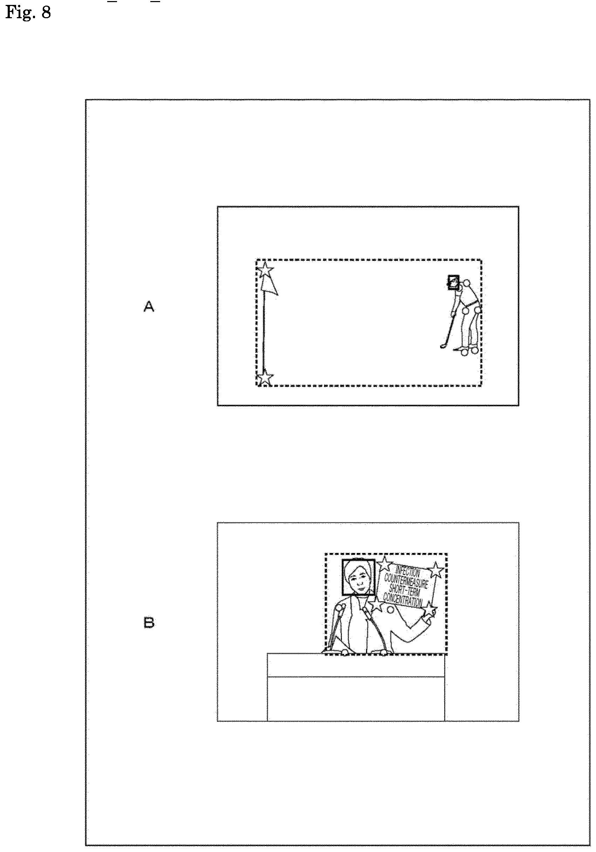

   Fig. 8 is a diagram showing an example of a part-containing area of each composition candidate when combined with an object detection result.
[Fig. 9]

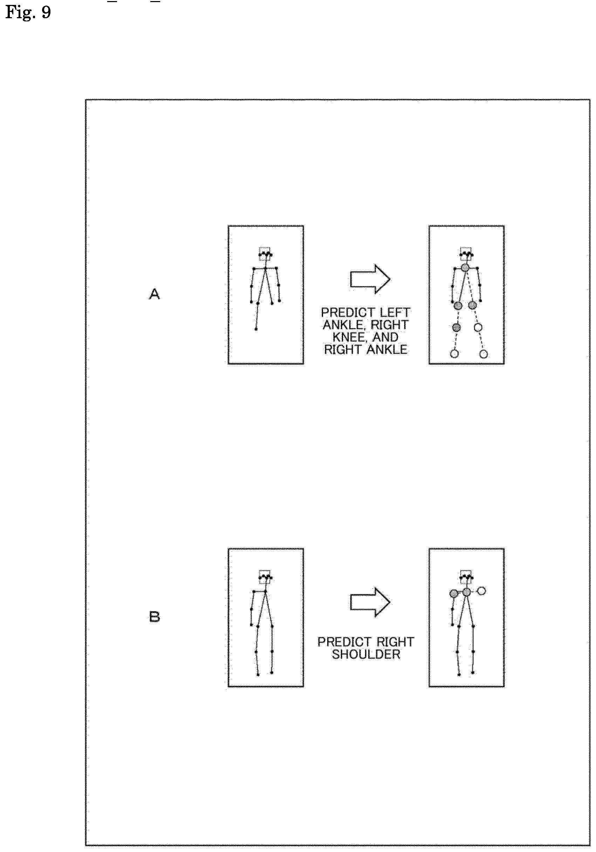

   Fig. 9 is a diagram showing an example of estimating a human body part when posture estimation fails to detect the corresponding part.
[Fig. 10]

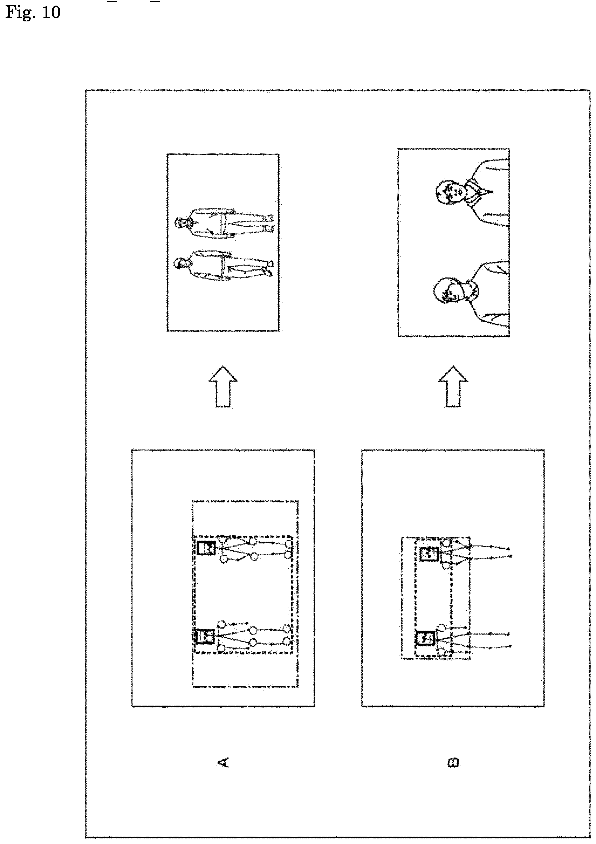

   Fig. 10 is a diagram showing an example of generating an output composition area by adding a missing margin to a part-containing area of a composition candidate determined as an output composition and correcting the aspect ratio to an output aspect ratio.
[Fig. 11]

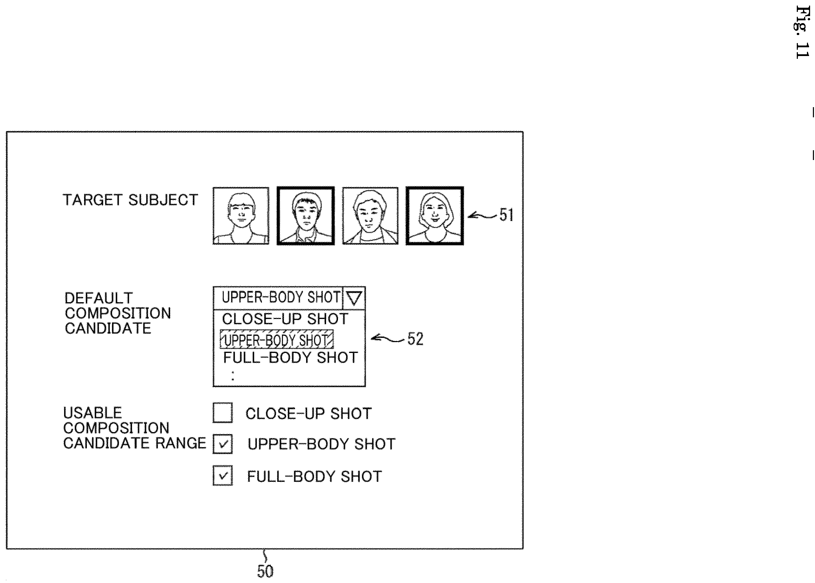

   Fig. 11 is a diagram showing an example of a UI screen for the user to select a desired target subject, a default composition candidate, and a usable composition candidate range.
[Fig. 12]

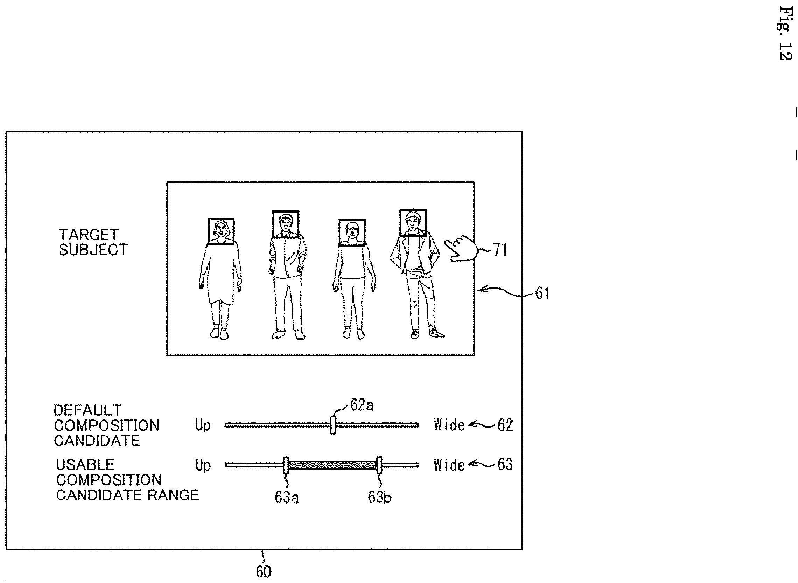

   Fig. 12 is a diagram showing another example of the UI screen of Fig. 11.
[Fig. 13]

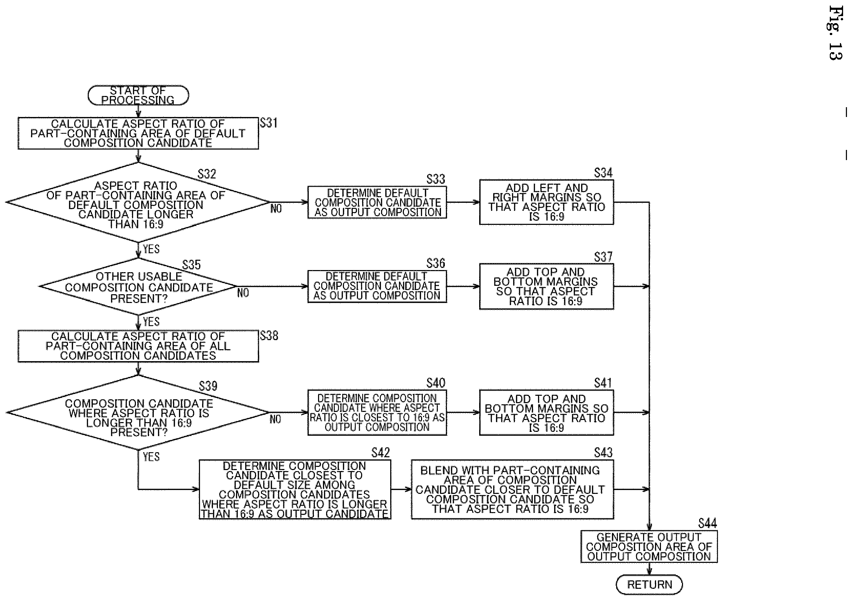

   Fig. 13 is a flowchart for explaining output composition determination processing in step S15 of Fig. 4.
[Fig. 14]

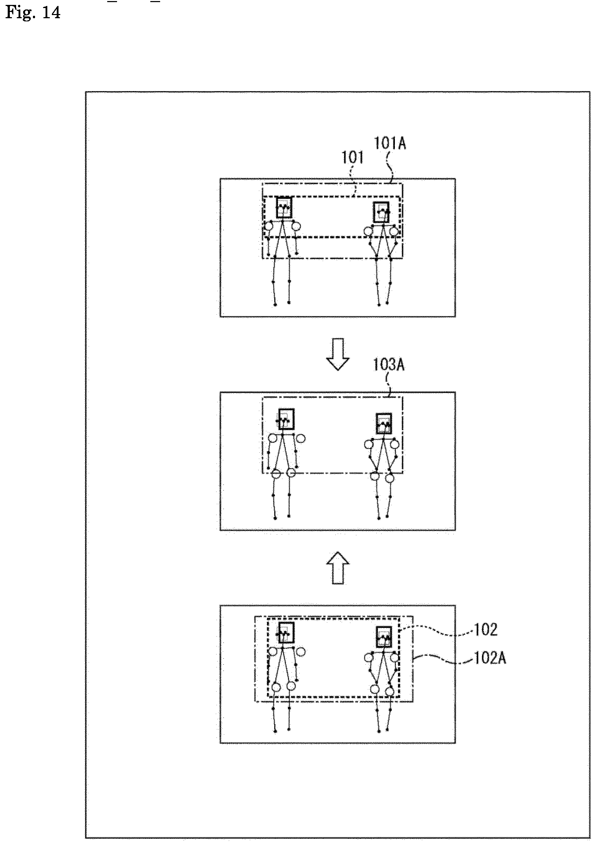

   Fig. 14 is a diagram showing an example of output composition blending in step S39 of Fig. 13.
[Fig. 15]

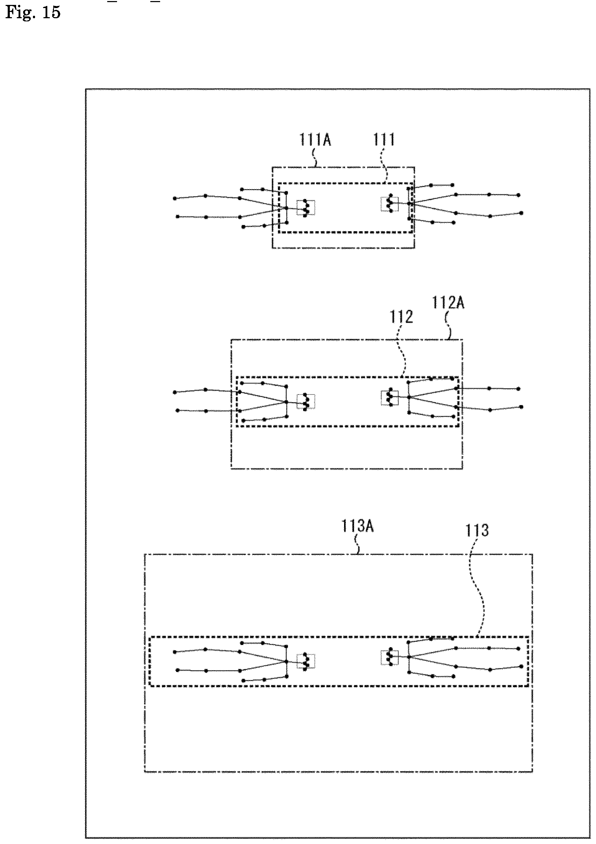

   Fig. 15 is a diagram showing an example of the processing contents in Fig. 13.
[Fig. 16]

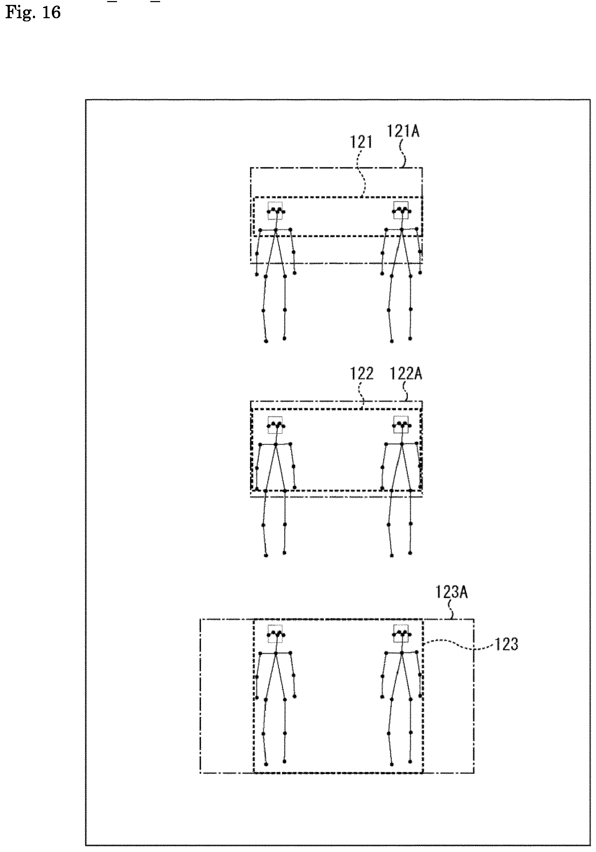

   Fig. 16 is a diagram showing an example of the processing contents of Fig. 13.
[Fig. 17]

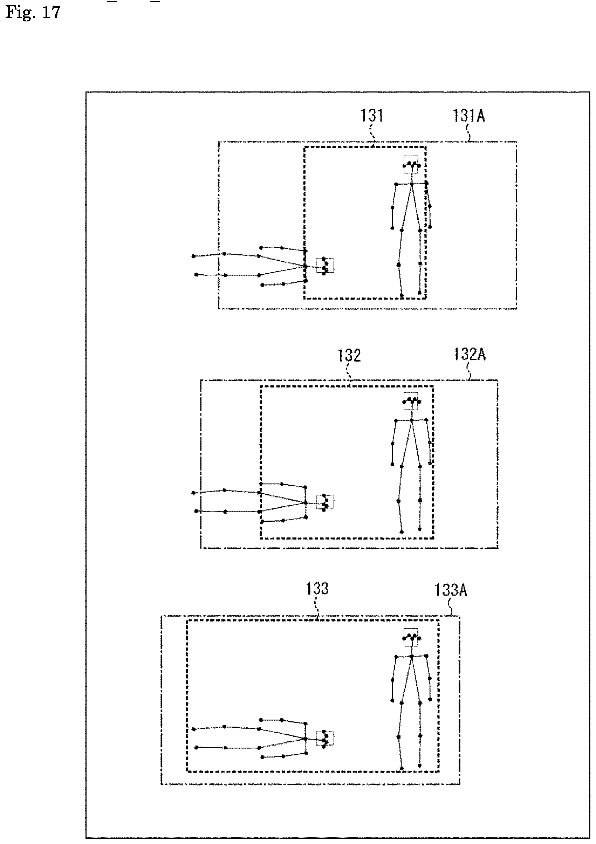

   Fig. 17 is a diagram showing an example of the processing contents of Fig. 13.
[Fig. 18]

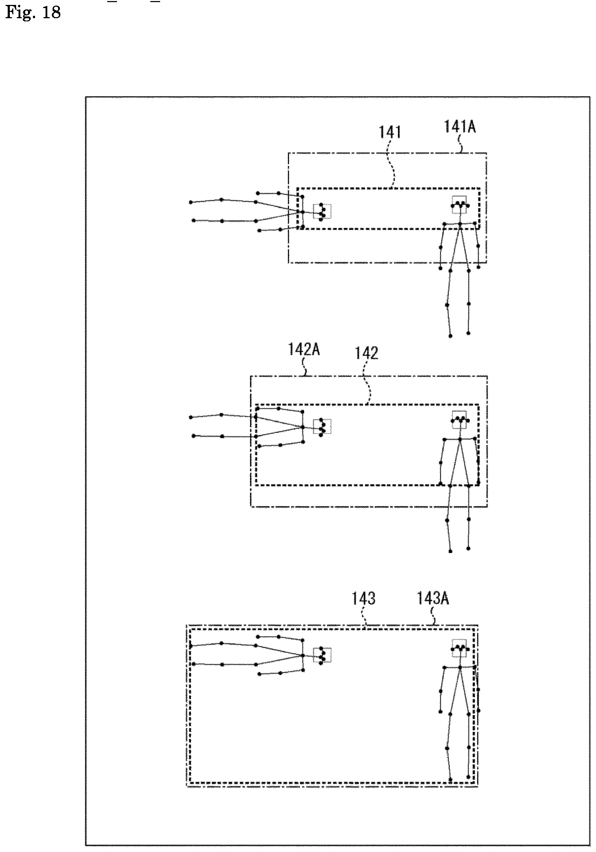

   Fig. 18 is a diagram showing an example of the processing contents in Fig. 13.
[Fig. 19]

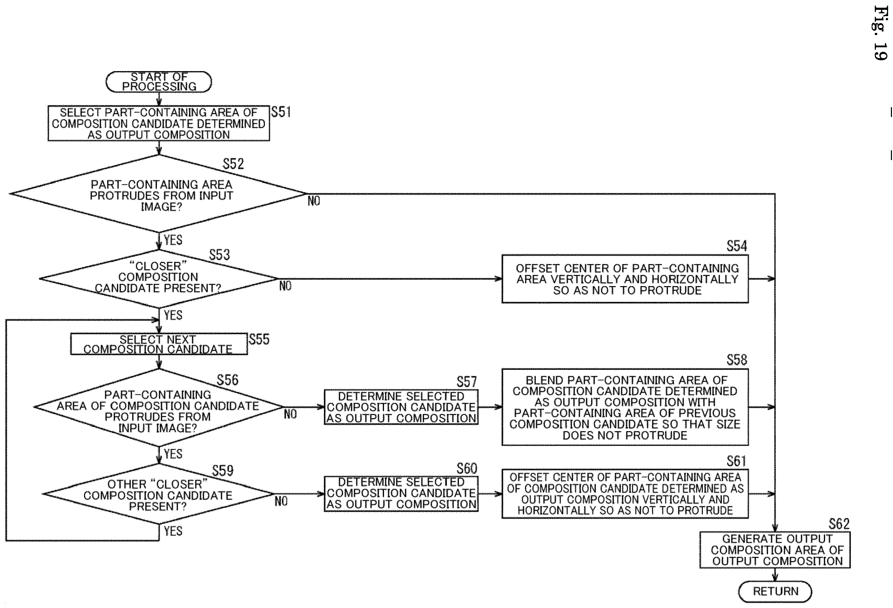

   Fig. 19 is a flowchart showing another example of output composition determination processing in step S15 of Fig. 4.
[Fig. 20]

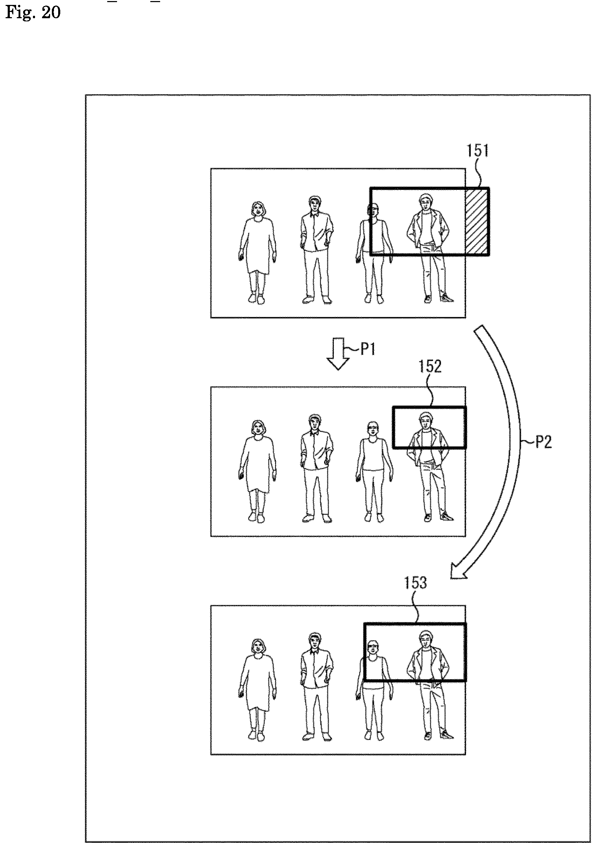

   Fig. 20 is a diagram showing an example of the processing contents of Fig. 19.
[Fig. 21]

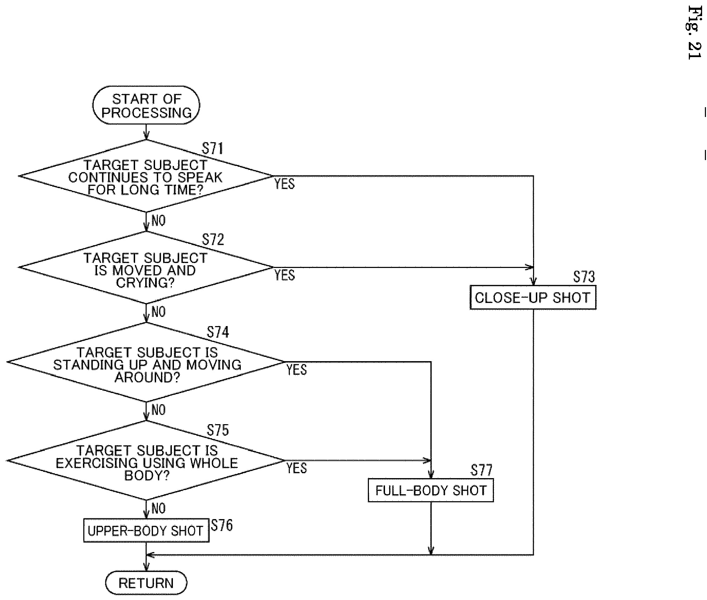

   Fig. 21 is a flowchart showing processing for determining composition candidates to be used by a computing device.
[Fig. 22]

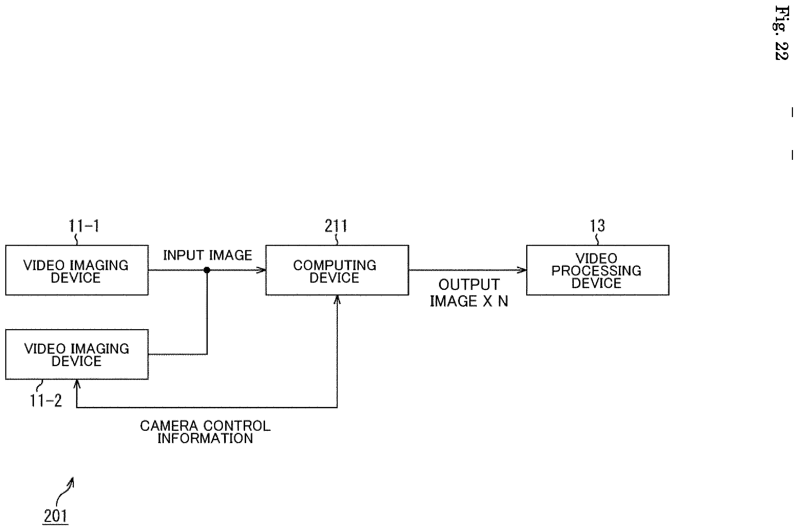

   Fig. 22 is a diagram showing a configuration example of a second embodiment of an imaging system to which the present technology is applied.
[Fig. 23]

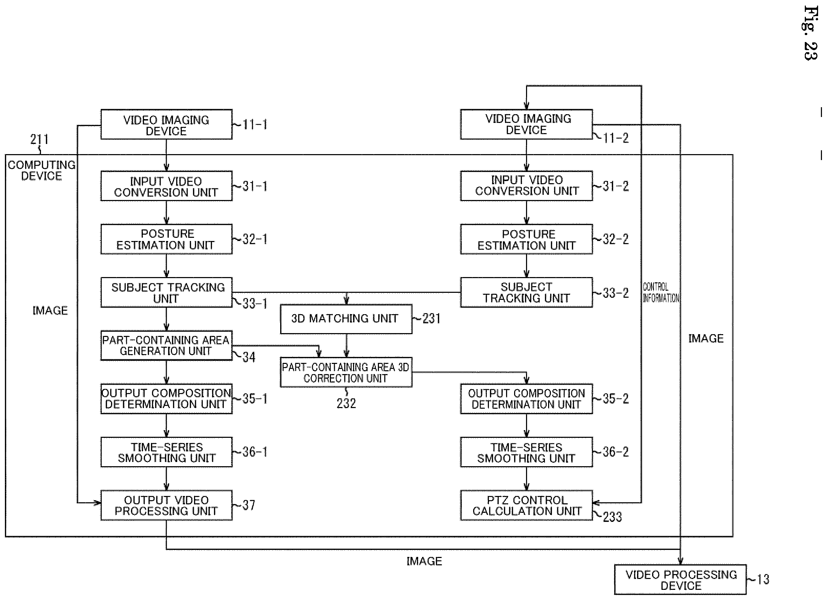

   Fig. 23 is a block diagram showing a first functional configuration example of the computing device of Fig. 22.
[Fig. 24]

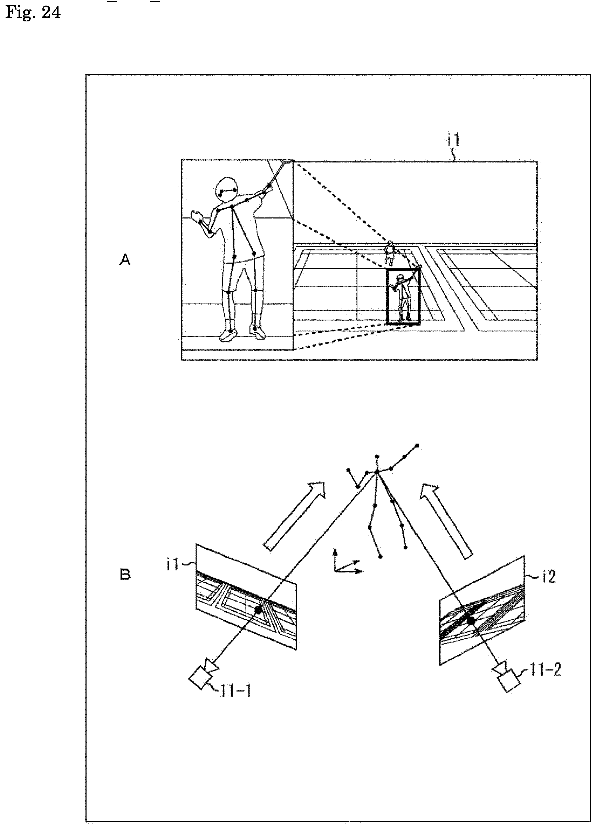

   Fig. 24 is a diagram showing a processing example of a 3D matching unit.
[Fig. 25]

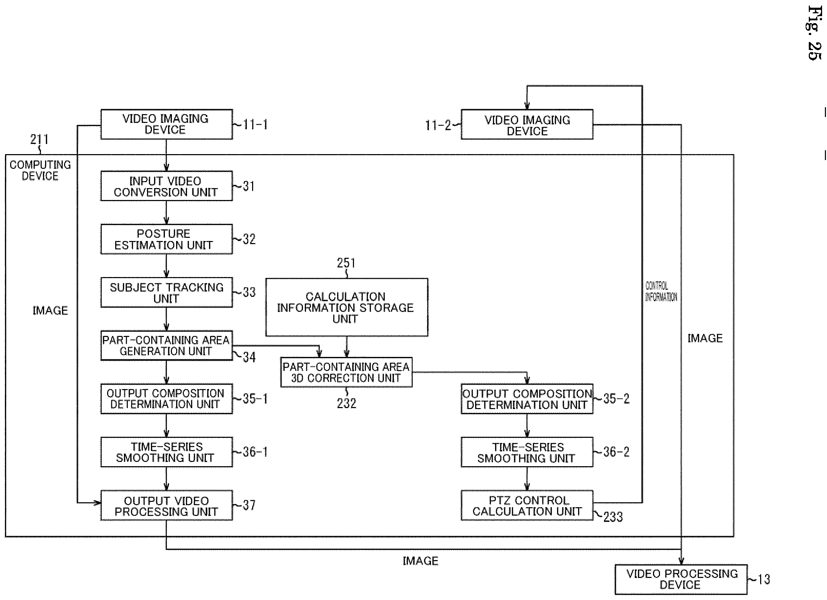

   Fig. 25 is a block diagram showing a second functional configuration example of the computing device of Fig. 22.
[Fig. 26]

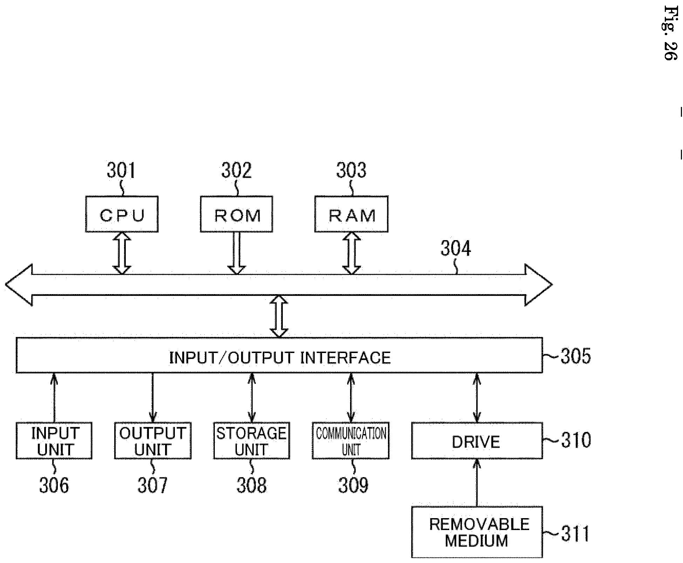

   Fig. 26 is a block diagram showing a configuration example of a computer.

### [Description of Embodiments]

An embodiment for implementing the present technology will be described below. The description will be made in the following order.
1. First embodiment (single-unit configuration)
2. Second embodiment (multi-unit configuration)
3. Others

### <1. First embodiment (single-unit configuration)>

### <Configuration of imaging system>

Fig. 1 is a diagram showing a configuration example of a first embodiment of an imaging system to which the present technology is applied.

An imaging system 1 in Fig. 1 includes a video imaging device 11, a computing device 12, and a video processing device 13.

The video imaging device 11 is configured of a camera, a studio camera, an omnidirectional camera, a PTZ camera, or the like. A PTZ camera is a camera that controls mechanical pan, tilt, and zoom.

The video imaging device 11 captures an image of one or more persons as subjects, and outputs an image corresponding to the captured subjects to the computing device 12 as an input image.

If the video imaging device 11 is a PTZ camera, it outputs camera control information to the computing device 12. In this case, the video imaging device 11 uses the camera control information supplied from the computing device 12 to capture an image of the subject, and outputs the image corresponding to the captured subject to the video processing device 13 via the computing device 12 as an output image.

The computing device 12 is configured of a server on the cloud, a personal computer, or the like. Note that the computing device 12 may be configured to be incorporated inside the video imaging device 11.

The computing device 12 determines the output composition of the output image based on the input image supplied from the video imaging device 11. The computing device 12 generates an output composition area of the determined output composition, crops the input image based on the generated output composition area of the output composition, and outputs the output image obtained by the cropping corresponding to the number of required streams (N) to the video processing device 13. That is, the output composition area of the output composition is used as a cropping frame for cropping the input image.

When the video imaging device 11 is a PTZ camera, the computing device 12 generates camera control information based on the camera control information supplied from the video imaging device 11 and the output composition area of the determined output composition and outputs the generated camera control information to the video imaging device 11.

The video processing device 13 is configured of devices such as a monitor or a switcher that processes video. If the video processing device 13 is a monitor, it displays an output image supplied from the computing device 12. When the video processing device 13 is a switcher, it edits the output image supplied from the computing device 12 and distributes it via a network (not shown).

### <Functions of video imaging device>

Fig. 2 is a diagram showing an example of functions of the video imaging device 11.

In Fig. 2, a video imaging device 11-1 and a video imaging device 11-2 are shown.

The video imaging device 11-1 is, for example, a studio camera. The computing device 12 uses a method of electronically cropping a portion of the input image (hereinafter referred to as an ePTZ method) as a method of outputting a desired composition from the input image captured by the video imaging device 11-1.

In this case, since the computing device 12 uses the ePTZ method, the computing device 12 electronically crops a portion of an input image i1 obtained by imaging the subject with a set cropping frame to produce an output image o1 of a desired composition.

The video imaging device 11-2 is, for example, a PTZ camera. The computing device 12 uses a method of mechanically controlling pan/tilt/zoom (hereinafter referred to as a PTZ method) as a method of outputting a desired composition from an input image captured by the video imaging device 11-1.

In this case, since the computing device 12 uses the PTZ method, the computing device 12 obtains an output image o2 of a desired composition by controlling a mechanical pan-tilt-zoom (PTZ) mechanism, imaging the subject, and obtaining an input image i2 of a desired composition.

The image quality obtained by the PTZ method is better than that by the ePTZ method. However, in the PTZ method, it is necessary to estimate the positions of parts of the human body outside the angle of view and to separate the movement of the device itself from the movement of the subject. The parts of the human body are, for example, the face, neck, shoulders, waist, and ankles.

Although the present technology can be applied to both the PTZ method and the ePTZ method described above, the case of using the ePTZ method will be described below.

### <Configuration of computing device>

Fig. 3 is a block diagram showing a functional configuration example of the computing device 12.

The functional configuration shown in Fig. 3 is realized, for example, by executing a predetermined program by a CPU (Central Processing Unit) (not shown). The same applies to the figures showing subsequent functional configuration examples.

The computing device 12 includes an input video conversion unit 31, a posture estimation unit 32, a subject tracking unit 33, a predetermined part-containing area generation unit 34, an output composition determination unit 35, a time-series smoothing unit 36, and an output video processing unit 37.

The input video conversion unit 31 converts an input image supplied from the video imaging device 11 into an image-recognition image for image recognition. The input video conversion unit 31 outputs the converted image-recognition image to the posture estimation unit 32.

The posture estimation unit 32 performs image recognition using the image-recognition image supplied from the input video conversion unit 31, estimates the posture of the person who is the subject, and detects parts of the human body. The posture estimation unit 32 outputs human body part information indicating the positions of the detected human body parts to the subject tracking unit 33. The human body part information consists of, for example, two-dimensional skeleton coordinates. Note that the posture estimation unit 32 may perform image recognition by machine learning, or may perform image recognition on a rule basis.

The subject tracking unit 33 uses the human body part information supplied from the posture estimation unit 32 to track each part of the human body. After tracking, the subject tracking unit 33 generates ID-attached subject information and outputs it to the predetermined part-containing area generation unit 34. One ID is added to each tracked human body. That is, the ID-attached subject information is human body part information (two-dimensional skeleton information) in which one ID is assigned to each tracked human body.

The predetermined part-containing area generation unit 34 defines body parts to be included in each composition candidate. For example, composition candidates include full-body shots, upper-body shots, and close-up shots.

The full-body shot is a first part composition candidate corresponding to the face, shoulders, waists, and ankles (first part), and is a composition candidate including the first part in the image. The upper-body shot is a second part composition candidate corresponding to the face, shoulders, and waists (second part), and is a composition candidate including the second part in the image. The close-up shot is a third part composition candidate corresponding to the face and shoulders (third part), and is a composition candidate including the third part in the image.

Here, the third part is included in the first part and the second part. The second part is included in the first part. Composition candidates are not limited to these, and may be increased. As a part to be included, the face does not have to be essential.

In addition, the full-body shot is a "pull" composition candidate with an angle of view equal to or wider than that of the upper-body shot. The upper-body shot is a "pull" composition candidate with an angle of view equal to or wider than that of the close-up shot. Conversely, the close-up shot is a "closer" composition candidate with an angle of view equal to or narrower than that of the upper-body shot. An upper-body shot is a "closer" composition candidate with an angle of view equal to or narrower than that of the full-body shot.

The predetermined part-containing area generation unit 34 generates a part-containing area including a part corresponding to each composition candidate (hereinafter also simply referred to as a part-containing area of the composition candidate). The part-containing area consists of a minimum graphic area that includes at least all body parts defined for each composition candidate. The minimum graphic area does not have to be the exact minimum graphic area, and may be the narrowest possible graphic area among the graphic areas containing the defined body parts. In the present specification, an example of a rectangular area is shown as one of the graphic areas, but the graphic area is not limited to a rectangle. A part-containing area is an area included in a composition candidate, and is used for determining whether a composition candidate corresponding to each part-containing area is an appropriate composition candidate.

The predetermined part-containing area generation unit 34 outputs composition candidate information indicating the coordinates of the part-containing area of each of the generated composition candidates to the output composition determination unit 35. Apart-containing area may be generated for all combinations of target subjects for which a composition is to be generated. For example, if there are Mr. A, Mr. B, and Mr. C, the part-containing area of the composition candidate for each individual, Mr. A and Mr. B, Mr. B and Mr. C, Mr. A and Mr. C, and Mr. A to Mr. C is generated.

The output composition determination unit 35 determines whether the composition candidate supplied from the part-containing area generation unit 34 is an appropriate composition candidate with good balance in the image. Further, the output composition determination unit 35 selects an appropriate composition candidate from usable composition candidates supplied from the part-containing area generation unit 34.

For example, it is determined whether it is an appropriate composition from the default composition candidate. In addition, it is determined that at least one of a composition candidate in which the aspect ratio of the part-containing area of the composition candidate is vertically longer than the aspect ratio of the output image (hereinafter referred to as an output aspect ratio), and a composition candidate in which the aspect ratio of the part-containing area of the composition candidate is the closest to the output aspect ratio is an appropriate composition candidate. Furthermore, among composition candidates in which the aspect ratio of the part-containing area of the composition candidate is vertically longer than the output aspect ratio, the composition candidate of which the aspect ratio is the closest to the output aspect ratio is determined to be the most appropriate.

Then, the output composition determination unit 35 determines a composition candidate determined or selected as an appropriate composition candidate as an output composition. The output composition determination unit 35 generates an output composition area of the output composition by correcting the aspect ratio of the part-containing area of the composition candidate determined as the output composition so as to match the output aspect ratio.

The target subject, the default composition candidate, the usable composition candidate range indicating the range of usable composition candidates, and the like can be set by the user using a UI (User Interface) screen, which will be described later.

The output composition determination unit 35 outputs output composition information indicating the coordinates of the output composition area of the determined output composition to the time-series smoothing unit 36. The determination processing by the output composition determination unit 35 may be performed using AI (Artificial Intelligence) represented by machine learning. At that time, a part of determination processing such as whether to select another composition may be performed using AI.

The time-series smoothing unit 36 smooths time-series deviations in the output composition area indicated in the output composition information supplied from the output composition determination unit 35. The time-series smoothing unit 36 supplies time-series smoothed composition information indicating the time-series smoothed composition, which is the smoothed output composition area, to the output video processing unit 37. When using the PTZ method, the time-series smoothing unit 36 converts the time-series smoothed composition information into camera control information for controlling the PTZ mechanism based on the camera control information supplied from the video imaging device 11 and outputs it to the video imaging device 11.

The output video processing unit 37 crops the input image supplied from the video imaging device 11 with the time-series smoothed composition indicated in the time-series smoothed composition information supplied from the time-series smoothing unit 36 to generate an output image. The output video processing unit 37 outputs the generated output image to the video processing device 13.

### <Processing of computing device>

Fig. 4 is a flowchart for explaining the processing of the computing device 12 of Fig. 3.

In step S11, the input video conversion unit 31 converts the input image supplied from the video imaging device 11 into an image-recognition image for image recognition. The input video conversion unit 31 outputs the converted image-recognition image to the posture estimation unit 32.

In step S12, the posture estimation unit 32 performs posture estimation processing. That is, the posture estimation unit 32 performs image recognition by machine learning using the image-recognition image supplied from the input video conversion unit 31, estimates the posture of the person who is the subject, and detects the parts of the human body. The posture estimation unit 32 outputs human body part information indicating the positions of the detected human body parts to the subject tracking unit 33.

In step S13, the subject tracking unit 33 performs subject tracking processing. That is, the subject tracking unit 33 uses the human body part information supplied from the posture estimation unit 32 to track each part of the human body. After tracking, the subject tracking unit 33 generates ID-attached subject information and outputs it to the part-containing area generation unit 34.

In step S14, the part-containing area generation unit 34 generates a part-containing area for each composition candidate. The part-containing area generation unit 34 outputs composition candidate information indicating the coordinates of the part-containing area of each of the generated composition candidates to the output composition determination unit 35.

In step S15, the output composition determination unit 35 performs output composition determination processing. That is, the output composition determination unit 35 selects an appropriate composition candidate from usable composition candidates among the composition candidates indicated by the composition candidate information supplied from the part-containing area generation unit 34 so as to improve the balance in the image and determines the appropriate composition candidate as an output composition. The output composition determination unit 35 corrects the part-containing area of the composition candidate determined as the output composition as necessary to generate the output composition area of the output composition. The output composition determination unit 35 outputs the output composition information indicating the coordinates of the output composition area of the determined output composition to the time-series smoothing unit 36.

In step S16, the time-series smoothing unit 36 performs time-series smoothing processing. That is, the time-series smoothing unit 36 smooths time-series deviations in the output composition information supplied from the output composition determination unit 35, and supplies the time-series smoothed composition information indicating the time-series smoothed composition which is the smoothed output composition area to the output video processing unit 37.

In step S17, the output video processing unit 37 processes the output image. That is, the output video processing unit 37 crops the input image supplied from the video imaging device 11 with the time-series smoothed composition indicated in the time-series smoothed composition information supplied from the time-series smoothing unit 36 to generate an output image. The output video processing unit 37 outputs the generated output image to the video processing device 13. After step S17, the processing of Fig. 4 ends.

By doing so, an appropriate composition can be generated. As a result, it is possible to obtain an image with a well-balanced composition in the positional relationship between subjects.

Hereinafter, the details of the present technology will be described.

### <Generation of part-containing area of composition candidate>

Figs. 5 to 7 are diagrams showing examples of the part-containing areas of each composition candidate generated in step S14 of Fig. 4.

Figs. 5 to 7 schematically show a human body, which is a target subject for composition generation. A solid-line rectangle overlapping the human body indicates a face. Solid-line circles indicate parts such as shoulders, knees, or ankles. A dashed-line rectangle indicates a part-containing area of each composition candidate. The same applies to the following figures.

Fig. 5A is a diagram showing an example of a close-up shot part-containing area when there are two target subjects.

In this case, the close-up shot part-containing area consists of the smallest rectangular area including the faces and shoulders of two human bodies, as shown in Fig. 5A.

Fig. 5B is a diagram showing an example of an upper-body shot part-containing area when there are two target subjects.

In this case, the upper-body shot part-containing area consists of the minimum rectangular area including the faces, shoulders and waists of two human bodies, as shown in Fig. 5B.

Fig. 5C is a diagram showing an example of a full-body shot part-containing area when there are two target subjects.

In this case, the full-body shot part-containing area consists of the minimum rectangular area including the faces, shoulders, waists, and ankles of two human bodies, as shown in Fig. 5C.

Fig. 6A is a diagram showing an example of a close-up shot part-containing area when there is only one target subject.

In this case, the close-up shot part-containing area consists of the minimum rectangular area including the face and shoulders of one human body, as shown in Fig. 6A.

Fig. 6B is a diagram showing an example of a full-body shot part-containing area when there are three target subjects.

In this case, the full-body shot part-containing area consists of the minimum rectangular area including the faces, shoulders, waists, and ankles of three human bodies, as shown in Fig. 6B.

Fig. 7A is a diagram showing an example of a full-body shot part-containing area when there is only one target subject lying down.

In this case, the full-body shot part-containing area consists of the minimum rectangular area including the face, shoulders, waist and ankles of one human body, as shown in Fig. 7A.

Fig. 7B is a diagram showing an example of an upper-body shot part-containing area when there are two target subjects and the vertical positions in the angle of view are different.

In this case, the upper-body shot part-containing area consists of the minimum rectangular area including the faces, shoulders, and waists of two human bodies, as shown in Fig. 7B.

It should be noted that the generation of the part-containing area is not limited to the case of only a person, and can also be applied to the case of being combining with an object detection result.

Fig. 8 is a diagram showing an example of a part-containing area of each composition candidate when combined with an object detection result.

Fig. 8 shows an object that is a target of object detection and a person that is a target subject for generating a part-containing area. Objects are marked with stars that represent the result of object detection. A solid-line rectangle overlapping the person indicates the face part. Solid-line circles indicate parts such as shoulders, knees, or ankles. A dashed-line rectangle indicates a part-containing area.

Fig. 8A is a diagram showing an example of a full-body shot part-containing area when a golf pin, which is an object to be detected, and a person playing golf are combined.

In this case, the full-body shot part-containing area consists of the minimum rectangular area including the highest and lowest positions of the golf pin, the face, shoulders, waists, and ankles of the person, as shown in Fig. 8A.

Fig. 8B is a diagram showing an example of an upper-body shot part-containing area when a placard, which is an object to be detected, and a person giving a speech are combined.

In this case, the upper-body shot part-containing area consists of the minimum rectangular area including the four corners of the placard and the face, shoulders, and waists of the person, as shown in Fig. 8B.

Here, if a human body part necessary for generating the part-containing area cannot be detected, the part-containing area generation unit 34 can predict the part position where the part exists based on the positional relationship of the other parts that have already been detected and use the predicted part position.

Fig. 9 is a diagram showing an example of estimating a human body part when posture estimation fails to detect the corresponding part.

In addition, in Fig. 9, description will be made assuming that the left represents the left as viewed in the drawing, and the right represents the right as viewed in the drawing. In Fig. 9, hatched circles indicate parts whose positional relationship is referenced, and white circles indicate predicted parts.

Fig. 9A shows an example in which the left ankle, right knee, and right ankle of the human body cannot be detected by posture estimation. That is, the face, both shoulders, both elbows, both wrists, neck, waist, and left knee of the human body are detected.

As shown in Fig. 9A, the part-containing area generation unit 34 predicts the left ankle, right knee, and right ankle that could not be detected based on the positional relationship of other detected parts (neck, both waists, left knee) and generates the part-containing area of the composition candidate using the positions of the predicted left ankle, right knee, and right ankle.

Fig. 9B shows an example in which the right shoulder, right elbow, and right wrist of the human body cannot be detected by posture estimation. That is, the face, left shoulder, left elbow, left wrist, neck, waist, both knees, and both ankles of the human body are detected.

As shown in Fig. 9B, the part-containing area generation unit 34 predicts the right shoulder that could not be detected based on the positional relationship of the other detected parts (neck and left shoulder), and generates the part-containing area using the position of the predicted right shoulder.

However, since the positional accuracy of the predicted parts is lower than the actually detected parts, the imaging system 1 may perform different processing for the case where the part-containing area is generated using only the actually detected parts and the case where the part-containing area is generated using one or more predicted parts.

When a composition candidate corresponding to a part-containing area generated using only the actually detected parts is determined as an output composition, the imaging system 1 moves the cropping frame in the case of the ePTZ method or the PTZ mechanism in the case of the PTZ method so as to immediately match the output composition area of the output composition.

On the other hand, when a composition candidate of a part-containing area generated using one or more predicted parts is determined as an output composition, the imaging system 1 determines whether the following two conditions are satisfied, and moves the cropping frame or the PTZ mechanism so as to match the output composition area of the output composition when it is determined that the conditions are satisfied.

Ideally, the part-containing area generation unit 34 wants to detect all necessary parts and generate a composition based on them. However, for example, if the lower half of the body is hidden behind a table, the waist part cannot be detected no matter how much time passes.

An image cannot be output unless the composition is generated forever. Therefore, if the composition candidate of the part-containing area generated using only the actually detected parts is not generated even after a certain period of time (for example, 1.0 seconds) as condition 1, the part-containing area generation unit 34 has no choice but to use the composition candidate of the part-containing area generated by predicting the position of the invisible part.

In addition, the part-containing area generation unit 34 tries to create a part-containing area of the composition candidate using the predicted parts. Then, if the predicted parts are not significantly different from the currently captured image, that is, as condition 2, when the deviation between the current position of the cropping frame or the position of the PTZ mechanism and the position of the composition candidate of the part-containing area generated this time is greater than a certain value, the part-containing area generation unit 34 does not forcibly adopt the part-containing area.

As can be seen, the predicted parts are used, for example, before the image breaks down.

### <Determining of output composition area of output composition>

The part-containing area generated as described above needs to be corrected to the output aspect ratio.

In other words, the balance of the composition candidates may be improved by simply adding a missing margin to the top, bottom, left, and right of the part-containing area, but this alone may degrade the balance.

Fig. 10 is a diagram showing an example of generating an output composition area of an output composition by adding a missing margin to a part-containing area and correcting the aspect ratio to an output aspect ratio.

In Fig. 10, dashed-line rectangles indicate part-containing areas of composition candidates, as in Figs. 5 to 7. A chain-line rectangle indicates an output composition area of an output composition generated by correcting the part-containing area to the output aspect ratio. The same applies to the following figures.

On the left side of Fig. 10A, a full-body shot part-containing area when there are two target subjects, and the output composition area of the output composition generated by adding margins to the left and right of the part-containing area are shown.

In the case of Fig. 10A, the composition candidate is set as the output composition, and the image output in accordance with the output composition area of the output composition has a good balance of the positional relationship of the subjects in the image, as shown on the right side.

On the left side of Fig. 10B, the part-containing area of the composition candidate of an upper-body shot when there are two target subjects, and the output composition area of the output composition generated by adding margins to the top and bottom of the part-containing area to correct the aspect ratio to an output aspect ratio are shown.

In the case of Fig. 10B, the composition candidate is set as the output composition, and the image output in accordance with the output composition area of the output composition has too much space in the upper part of the image, and the positional relationship between subjects in the image is not very well-balanced as shown on the right side.

Therefore, in step S15 of Fig. 4 described above, the output composition determination unit 35 corrects the part-containing area of an appropriate composition candidate from among the usable composition candidates as necessary, and generates an output composition area of the output composition to thereby output an image with a well-balanced composition. At that time, the user selects at least one of the target subject, the default composition candidate, and the usable composition candidate range. As a result, since the composition that the user does not like can be avoided in advance, and the composition candidates are narrowed down, the processing can be shortened.

### <Example of UI screen>

Fig. 11 is a diagram showing an example of a UI screen for the user to select a desired target subject, default composition candidates, and a usable composition candidate range.

AUI screen 50 of Fig. 11 includes, from the top, a target subject selection area 51, a default composition candidate selection area 52, and a usable composition candidate range selection area 53.

In the target subject selection area 51, thumbnail images of four persons appearing in the image are displayed as candidates for selecting the target subject.

Further, the second and fourth thumbnail images from the left are marked with thick frames. When the user touches a thumbnail image of a person to be selected as the target subject with a finger or the like or performs a cursor operation thereon, the person corresponding to the thumbnail image is selected as the target subject, and a thick frame is displayed on the thumbnail image.

In the default size selection area 52, a pull-down menu displaying a close-up shot, an upper-body shot, and a full-body shot is displayed as candidates for selecting the default composition candidate from the composition candidates. In this example, the hatched upper-body shot is selected.

In the usable composition candidate range selection area 53, radio buttons for selecting a close-up shot, an upper-body shot, and a full-body shot are displayed as candidates for selecting the range of usable composition candidates. In this example, the radio buttons of the upper-body shot and full-body shot are selected and checked.

### <Other examples of UI screen>

Fig. 12 is a diagram showing another example of the UI screen of Fig. 11.

AUI screen 60 of Fig. 12 includes, from the top, a target subject selection area 61, a default composition candidate selection area 62, and a usable composition candidate range selection area 63.

In the target subject selection area 61, an image being captured is displayed in real time as a candidate for selecting a target subject. When the user touches the area around the face of a person appearing in the image with the finger 71 or the like or performs a cursor operation thereon, the person corresponding to the touched face is selected as the target subject, and a frame indicating that the person is selected is displayed. Four persons are captured in the image, and it can be seen from the display of the frame that the four persons are selected as the target subjects.

In the default composition candidate selection area 62, a slide bar 62a for selecting a default composition candidate from Up (close-up shot) to Wide (full-body shot) is shown. In Fig. 12, the slide bar 62a is positioned approximately midway between Up and Wide, and an upper-body shot is selected.

In the usable composition candidate range selection area 63, slide bars 63a and 63b for selecting the range of usable composition candidates from Up to Wide are shown. In Fig. 12, the range from the position of the slide bar 63a positioned close to Up to the position of the slide bar 63b positioned close to Wide is selected as the range of usable composition candidates. That is, in the usable composition candidate range selection area 63, the range of parts to be included in the output composition is selected according to the positions of the slide bars 63a and 63b.

Note that the UI screen 50 and the UI screen 60 described above are examples, and may be configured to select one or two of the three options of the target subject, the default composition candidate, and the usable composition candidate range. In the case of the UI screen 50 and the UI screen 60, the subject's face is displayed in a frame in the target subject selection area 61, but the subject may be displayed as a composition candidate (for example, an upper-body shot) corresponding to the default composition candidate selected in the default composition candidate selection area 62.

### <Example of output composition determination processing>

Fig. 13 is a flowchart for explaining the output composition determination processing in step S15 of Fig. 4.

Note that Fig. 13 shows an example in which the output aspect ratio is 16:9.

In step S31, the output composition determination unit 35 calculates the aspect ratio of the part-containing area of the default composition candidate selected in advance.

In step S32, the output composition determination unit 35 determines whether the aspect ratio of the part-containing area of the default composition candidate is longer than 16:9. If it is determined in step S32 that the aspect ratio of the part-containing area of the default composition candidate is vertically longer than 16:9, the processing proceeds to step S33.

The output composition determination unit 35 determines the default composition candidate as the output composition in step S33, and adds margins to the left and right of the part-containing area so that the aspect ratio of the part-containing area becomes 16:9 in step S34. After that, the processing proceeds to step S44.

If it is determined in step S32 that the aspect ratio of the part-containing area of the composition candidate is longer than 16:9, the processing proceeds to step S35.

In step S35, the output composition determination unit 35 determines whether there is another usable composition candidate. Other usable composition candidates are composition candidates in the range selected as the usable composition candidate range in the usable composition candidate range selection area 63. That is, when the default composition candidate is an upper-body shot, other usable composition candidates are the composition candidates of close-up shots and full-body shots. If it is determined in step S35 that there are no other usable composition candidates, the processing proceeds to step S36.

In step S36, the output composition determination unit 35 determines the default composition candidate as the output composition. In step S37, the output composition determination unit 35 adds margins to the top and bottom of the part-containing area of the default composition candidate so that the aspect ratio of the part-containing area is 16:9. After that, the processing proceeds to step S44.

In step S35, when the output composition determination unit 35 determines that there is another usable composition candidate, the processing proceeds to step S38.

In step S38, the output composition determination unit 35 calculates the aspect ratios of the part-containing areas of all composition candidates.

In step S39, the output composition determination unit 35 determines whether there is a usable composition candidate in which the aspect ratio of the part-containing area of the composition candidate is vertically longer than 16:9. If it is determined in step S39 that there is no usable composition candidate in which the aspect ratio of the part-containing area of the composition candidate is vertically longer than 16:9, the processing proceeds to step S40.

In step S40, the output composition determination unit 35 selects the composition candidate in which the aspect ratio of the part-containing area of the composition candidate is closest to 16:9. In step S41, the output composition determination unit 35 adds margins to the top and bottom of the part-containing area of the selected composition candidate so that the aspect ratio is 16:9. After that, the processing proceeds to step S44.

If it is determined in step S39 that there is a usable composition candidate in which the aspect ratio of the part-containing area of the composition candidate is vertically longer than 16:9, the processing proceeds to step S42.

In step S42, the output composition determination unit 35 selects a composition candidate whose part-containing area is closest to the default composition candidate from among the usable composition candidates in which the aspect ratio of the part-containing area of the composition candidate is vertically longer than 16:9.

In step S43, the output composition determination unit 35 blends the composition candidate selected in step S42 with the composition candidate closer to the part-containing area of the default composition candidate so that the aspect ratio of the part-containing area of the composition candidate is 16:9. Blending means correcting the sizes of the part-containing areas of two composition candidates so that the aspect ratio of the part-containing area is 16:9. Note that the blending in step S43 will be described later with reference to Fig. 14. Moreover, the processing of step S43 may be omitted. After that, the processing proceeds to step S44.

Note that step S43 may be skipped. That is, even without blending, the output composition area may be generated by adding a margin or the like to the part-containing area of the composition candidate determined as the output composition in step S42.

In step S44, the output composition determination unit 35 generates an output composition area of the output composition based on the part-containing area corrected by addition or blending in step S34, S37, S41, or S43. After step S44, the processing ends.

As will be described later, adding left and right margins to a part-containing area is more likely to give the composition candidate a more natural balance than adding top and bottom margins. Therefore, in steps S37 and S41, there is a possibility that the composition candidate will be unnatural due to the addition of the top and bottom margins, but since there is no other appropriate composition candidate, the composition candidate is used unavoidably. In this case, the composition may be changed to another composition candidate, the subjects included in the composition candidates may be changed, or the number of subjects may be changed. Further, in step S41, a default composition candidate may be used.

As described above, when the aspect ratio of the part-containing area of the default composition candidate is vertically longer than the output aspect ratio, the default composition candidate is determined as the output composition (step S33).

This is because adding spaces (margins) to the left and right will result in a more well-balanced composition.

Further, even if the aspect ratio of the part-containing area of the default composition candidate is horizontally long, if there is no other composition candidate, the default composition candidate is determined as the output composition (step S36).

Further, when there are other composition candidates and the default composition candidate is not determined as the output composition, the following composition candidates are determined as the output composition.

For example, if there are other composition candidates in which the aspect ratio of the part-containing area is vertically longer than the output aspect ratio, the composition candidate closest to the size of the part-containing area of the default composition candidate among the other composition candidates is determined as the output composition (step S42). If there is no other composition candidate in which the aspect ratio of the part-containing area is vertically longer than the output aspect ratio, the composition candidate in which the aspect ratio of the part-containing area is closest to the output aspect ratio among the composition candidates is determined as the output composition (step S40).

In step S35 of Fig. 13, it is determined whether there is another usable composition candidate, but it may be determined whether there is another usable "pull" composition candidate. In this case, after step S38, the processing for the "pull" composition candidate is performed.

Fig. 14 is a diagram showing an example of blending of composition candidates in step S39 of Fig. 13.

In Fig. 14, part-containing areas 101 and 101A of close-up shot composition candidates, part-containing areas 102 and 102A of upper-body shot composition candidates, and an output composition area 103A generated by correcting the sizes of the part-containing areas 101A and 102A are shown.

The part-containing area 101Ais an area in which margins are added to the top and bottom of the part-containing area 101 of the close-up shot in order to set the aspect ratio to 16:9. The part-containing area 102Ais an area in which margins are added to the left and right of the part-containing area 102 of the upper-body shot in order to set the aspect ratio to 16:9.

In such a case, the output composition determination unit 35 determines, for example, the composition candidate of the part-containing area 101A as an output candidate, corrects the sizes of the part-containing areas 101A and 102A to generate the output composition area 103A.

Figs. 15 to 18 are diagrams showing examples of the processing contents of Fig. 13.

Figs. 15 to 18 show examples in which the default composition candidate is an upper-body shot, and all composition candidates are included in the usable composition candidate range.

Fig. 15 shows part-containing areas 111 and 111A of a close-up shot, part-containing areas 112 and 112A of an upper-body shot, and part-containing areas 113 and 113A of a full-body shot. The part-containing areas 111A to 113A are areas obtained by correcting the part-containing areas 111 to 113, respectively, so that the aspect ratio is 16:9, and are areas that will be the output composition area generated when the corresponding composition candidate is determined as the output composition.

Since the part-containing area 111 of the upper-body shot, which is the default composition candidate, is horizontally long, the close-up shot and the full-body shot, which are other composition candidates, are also included in the determination target of the output composition.

Among the close-up shot part-containing area 111 and the full-body shot part-containing area 113, the close-up shot part-containing area 111 has the aspect ratio closest to 16:9. Therefore, in this case, a close-up shot is determined as the output composition, and the output composition area is generated based on the part-containing area 111Ain which the part-containing area 111 is corrected so that margins are added to the top and bottom thereof.

Fig. 16 shows part-containing areas 121 and 121A of a close-up shot, part-containing areas 122 and 122A of an upper-body shot, and part-containing areas 123 and 123A of a full-body shot. The part-containing areas 121A to 123A are areas obtained by correcting the part-containing areas 121 to 123, respectively, so that the aspect ratio is 16:9, and are areas that will be the output composition area generated when the corresponding composition candidate is determined as the output composition.

Since the part-containing area 122 of the upper-body shot, which is the default composition candidate, is horizontally long, the close-up shot and the full-body shot, which are other composition candidates, are also included in the determination target of the output composition.

The part-containing area 121 of the close-up shot is horizontally long, and the part-containing area 123 of the full-body shot is vertically long. Here, the part-containing area 122 of the upper-body shot has the aspect ratio closest to 16:9. Therefore, in this case, the full-body shot is determined as the output composition, and the output composition area is generated based on the part-containing area (not shown) obtained by correcting the sizes of the part-containing area 123A of the full-body shot and the part-containing area 122A of the upper-body shot, which is the default composition candidate.

Fig. 17 shows part-containing areas 131 and 131A of a close-up shot, part-containing areas 132 and 132A of an upper-body shot, and part-containing areas 133 and 133A of a full-body shot.

The part-containing area 132 of the upper-body shot, which is the default composition candidate, has a vertically long aspect ratio. Therefore, the upper-body shot is determined as the output composition, the part-containing area 132 is corrected to add left and right margins, and the output composition area is generated based on the corrected part-containing area 132A.

Fig. 18 shows part-containing areas 141 and 141A of a close-up shot, part-containing areas 142 and 142A of an upper-body shot, and part-containing areas 143 and 143A of a full-body shot.

The part-containing area 142 of the upper-body shot, which is the default composition candidate, has a horizontally long aspect ratio. Therefore, close-up shots and full-body shots, which are other composition candidates, are also included in the determination target of the output composition.

Among the close-up shot part-containing area 141 and the full-body shot part-containing area 143, the aspect ratio of the full-body shot part-containing area 143 is approximately 16:9. Therefore, a full-body shot is determined as an output composition, and an output composition area is generated based on the part-containing area 143 (part-containing area 143A) of the full-body shot.

As described above, the output composition is determined based on the part-containing area of each composition candidate, the part-containing area of the composition candidate determined as the output composition is corrected as necessary, and an output composition area of the output composition is generated based on the corrected part-containing area. In this way, an appropriate composition can be generated.

### <Another example of output composition determination processing>

Fig. 19 is a flowchart showing another example of the output composition determination processing in step S15 of Fig. 4.

Note that the processing of Fig. 19 is processing performed after a composition candidate is determined as an output composition, and a margin is added (corrected) so that the aspect ratio of the composition candidate determined as the output composition becomes the output aspect ratio. That is, the processing in Fig. 19 is processing performed after steps S34, S37, S39, or S41 in Fig. 13.

In step S51, the output composition determination unit 35 selects the part-containing area of the composition candidate determined as the output composition.

In step S52, the output composition determination unit 35 determines whether the part-containing area of the composition candidate protrudes from the input image. The range in which the input image is shown is the driving range of the PTZ mechanism for the PTZ method, and the croppable range for the ePTZ method. If it is determined in step S52 that the part-containing area of the composition candidate does not protrude from the input image, the processing proceeds to step S60.

If it is determined in step S52 that the part-containing area of the composition candidate protrudes from the input image, the processing proceeds to step S53.

In step S53, the output composition determination unit 35 determines whether there is a composition candidate "closer" than the determined composition candidate as the output composition. If it is determined in step S53 that there is no composition candidate "closer" than the composition candidate determined as the output composition, the processing proceeds to step S54.

In step S54, the output composition determination unit 35 offsets the center of the part-containing area vertically and horizontally so that it does not protrude from the input image. After that, the processing proceeds to step S62.

If it is determined in step S53 that there is another composition candidate "closer" than the composition candidate, the processing proceeds to step S55.

In step S55, the output composition determination unit 35 selects the next composition candidate.

In step S56, the output composition determination unit 35 determines whether the part-containing area of the selected composition candidate protrudes from the input image. If it is determined that the part-containing area of the composition candidate does not protrude from the input image, the processing proceeds to step S57.

In step S57, the output composition determination unit 35 determines the selected composition candidate as an output composition.

In step S58, the output composition determination unit 35 blends the part-containing area of the composition candidate determined as the output composition and the part-containing area of the corrected composition candidate immediately before that so that the size does not protrude from the input image. After that, the processing proceeds to step S62.

Note that step S58 may be skipped. That is, even without blending, the output composition area may be generated by adding a margin or the like to the part-containing area of the composition candidate determined as the output composition in step S57.

If it is determined in step S56 that the composition candidate protrudes from the input image, the processing proceeds to step S59.

In step S59, the output composition determination unit 35 determines whether there is another composition candidate "closer" than the selected composition candidate. If it is determined that there is no other correction composition candidate "closer" than the selected composition candidate, the processing proceeds to step S60.

In step S60, the output composition determination unit 35 determines the selected composition candidate as the output composition.

In step S61, the output composition determination unit 35 offsets the center of the composition candidate determined as the output composition vertically and horizontally so that the size does not protrude from the input image. After that, the processing proceeds to step S62.

In step S59, when the output composition determination unit 35 determines that there is another composition candidate "closer" than the selected composition candidate, the processing returns to step S55, and the subsequent processing is repeated.

In step S62, the output composition determination unit 35 generates an output composition area of the output composition based on the part-containing area corrected by addition or blending in steps S54, S58, and S61. After step S62, the processing ends.

In steps S54 and S61, since there is no other appropriate composition candidate, the part-containing area of the composition candidate is used unavoidably, although it may be unnatural. In this case, the subjects included in the composition may be changed, or the number of subjects may be changed.

In the case of Fig. 19, since the composition candidate is determined again as the output composition based on the positional relationship between the part-containing area of the composition candidate determined as the output composition and the input image as described above, it is possible to generate a more appropriate composition.

Fig. 20 is a diagram showing an example of the processing contents of Fig. 19.

Fig. 20 shows a close-up shot part-containing area 151 and an upper-body shot part-containing area 152. Note that Fig. 20 shows an example in which a close-up shot is determined as an output image.

As indicated by hatching, the close-up shot part-containing area 151 has its right end protruding from the input image.

The upper-body shot is a composition candidate "closer" than the close-up shot, and the right end of the part-containing area 152 of the upper-body shot does not protrude from the input image.

If there is an upper-body shot "closer" than the close-up shot, the upper-body shot is determined again as the output composition, as indicated by arrow P1.

If there is no more "closer" composition candidate than a close-up shot, the close-up shot is determined as the output composition as it is. Then, as indicated by arrow P2, the composition center of the close-up shot part-containing area 151 is offset vertically and horizontally so as not to protrude from the input image, and the offset part-containing area 151 is generated as the output composition area.

As described above, even if the composition candidate is determined as the output composition, if the part-containing area of the composition candidate determined as the output composition protrudes from the input image, a more "closer" composition candidate is determined again as the output composition, and the balance is ensured.

In the above description, an example in which the user selects the default composition candidate and or usable composition candidate range has been described. However, the composition candidate to be used (that is, the default composition candidate) may be determined by the computing device 12. Further, when information indicating a composition candidate is included in metadata at the time of imaging, it may be used as a default composition candidate.

Fig. 21 is a flowchart showing processing for determining composition candidates to be used by the computing device 12.

In step S71, the output composition determination unit 35 determines whether the target subject continues to speak for a long time by using machine learning or the like for determining the speaker from the input image. If it is determined in step S71 that the target subject has not continued to speak for a long time, the processing proceeds to step S72.

In step S72, the output composition determination unit 35 determines whether the target subject is moved and crying by using machine learning or the like for estimating the emotion of the subject from the input image.

If it is determined in step S72 that the target subject is moved and crying, or if it is determined in step S71 that the target subject continues to speak for a long time, the processing proceeds to step S73.

In step S73, the output composition determination unit 35 determines a close-up shot as a composition candidate to be used.

If it is determined in step S72 that the target subject is not moved and crying, the processing proceeds to step S74.

In step S74, the output composition determination unit 35 determines whether the target subject is standing up and moving around. If it is determined in step S74 that the target subject has not stood up and moved around, the processing proceeds to step S75.

In step S75, the output composition determination unit 35 determines whether the target subject is exercising using the whole body. If it is determined in step S75 that the target subject is not exercising using the whole body, the processing proceeds to step S76.

In step S76, the output composition determination unit 35 determines an upper-body shot as a composition candidate to be used.

If it is determined in step S74 that the target subject is standing up and moving around, or if it is determined in step S75 that the target subject is exercising using the whole body, the processing proceeds to step S77.

In step S77, the output composition determination unit 35 determines a full-body shot as a composition candidate to be used.

After step S73, S76, or S77, the processing ends.

The composition candidate determined as described above may be used as the default composition candidate, and the determination processing described above with reference to Fig. 13 may be performed to determine the output composition.

### <2. Second embodiment (multi-unit configuration)>

### <Configuration of imaging system>

Fig. 22 is a diagram showing a configuration example of a second embodiment of an imaging system to which the present technology is applied.

An imaging system 201 in Fig. 22 includes video imaging devices 11-1 and 11-2, a computing device 211, and a video processing device 13. In Fig. 22, parts corresponding to those in Fig. 1 are denoted by the same reference numerals, and description thereof will be omitted to avoid duplication.

The video imaging device 11-1 is the studio camera shown in Fig. 2. The video imaging device 11-2 is the PTZ camera shown in Fig. 2.

Similarly to the video imaging device 11 in Fig. 1, the video imaging devices 11-1 and 11-2 capture an image of one or more persons as subjects, and outputs an image corresponding to the captured subjects to the computing device 211 as an input image.

Since the video imaging device 11-2 is a PTZ camera, it outputs camera control information to the computing device 211. The video imaging device 11-2 uses the camera control information supplied from the computing device 211 to capture an image of the subject, and outputs the image corresponding to the captured subject to the video processing device 13 via the computing device 211 as an input image.

The computing device 211 is configured of a server on the cloud, a personal computer, or the like, similarly to the computing device 12 in Fig. 1.

The computing device 211 determines the output composition of the output image of the video imaging device 11-2 based on the input image supplied from the video imaging device 11-1. At that time, the computing device 12 applies a camera calibration technique based on the input image supplied from the video imaging device 11-1 and the input image supplied from the video imaging device 11-2, and calculates the positional relationship between the video imaging devices 11. The computing device 211 performs 3D correction on the part-containing area of the composition candidate based on the calculated positional relationship, and determines the output composition of the output image of the video imaging device 11-2.

The computing device 211 generates camera control information based on the camera control information supplied from the video imaging device 11-2 and the determined final composition, and outputs the generated camera control information to the video imaging device 11-2.

Based on the camera control information, the video imaging device video imaging device 11-2 captures an image of one or more persons as subjects, and outputs the image corresponding to the captured subject corresponding to the number of required streams (N) to the video processing device 13 via the computing device 211 as an output image.

Note that in the imaging system 201, the computing device 211 may output the output composition of the output images of both the video imaging device 11-1 and the video imaging device 11-2.

### <First configuration of computing device>

Fig. 23 is a block diagram showing a first functional configuration example of the computing device 211.

In Fig. 23, the computing device 211 includes input video conversion units 31-1 and 31-2, posture estimation units 32-1 and 32-2, subject tracking units 33-1 and 33-2, and a part-containing area generation unit 34. The computing device 211 includes output composition determination units 35-1 and 35-2, time-series smoothing units 36-1 and 36-2, an output video processing unit 37, a 3D matching unit 231, a part-containing area 3D correction unit 232, and a PTZ control calculation unit 233.

In Fig. 23, parts corresponding to those in Fig. 3 are denoted by the same reference numerals.

The input video conversion unit 31-1, the posture estimation unit 32-1, and the subject tracking unit 33-1 perform the processing described above with reference to Fig. 3 using the input image supplied from the video imaging device 11-1. The input video conversion unit 31-2, the posture estimation unit 32-2, and the subject tracking unit 33-2 perform the processing described above with reference to Fig. 3 using the input image supplied from the video imaging device 11-2.

The subject tracking unit 33-1 outputs ID-attached subject information to the part-containing area generation unit 34 and the 3D matching unit 231. The subject tracking unit 33-2 outputs the ID-attached subject information to the 3D matching unit 231.

The ID-attached subject information supplied from the subject tracking unit 33-1 is two-dimensional skeleton coordinates obtained from the input image i1 of the video imaging device 11-1, as shown in Fig. 24A. The ID-attached subject information supplied from the subject tracking unit 33-2 is two-dimensional skeleton coordinates obtained from the input image i2 of the video imaging device 11-2.

The 3D matching unit 231 calculates a three-dimensional skeleton position based on a plurality of two-dimensional skeleton coordinates supplied from the subject tracking units 33-1 and 33-2, and outputs three-dimensional skeleton position information indicating the three-dimensional skeleton position to the part-containing area generation unit 34.

That is, as shown in Fig. 24B, the 3D matching unit 231 obtains two-dimensional skeleton coordinates from the input image i1 of the video imaging device 11-1 and the input image i2 of the video imaging device 11-2. The 3D matching unit 231 applies the two-dimensional skeleton coordinates obtained from the input image i1 of the video imaging device 11-1 and the two-dimensional skeleton coordinates obtained from the input image i2 of the video imaging device 11-2 to a camera calibration technique to calculate the three-dimensional skeleton position to obtain the three-dimensional skeleton position.

The part-containing area generation unit 34 outputs the composition candidate information indicating the coordinates of the part-containing area of each composition candidate to the output composition determination unit 35 and the part-containing area 3D correction unit 232.

Based on the three-dimensional skeleton position information supplied from the 3D matching unit 231, the part-containing area 3D correction unit 232 corrects the composition candidate information indicating the coordinates of the part-containing area of the composition candidate viewed from the video imaging device 11-1 to the composition candidate information indicating the coordinates of the part-containing area of the composition candidate viewed from the video imaging device 11-2.

The part-containing area 3D correction unit 232 outputs the composition candidate information indicating the coordinates of the part-containing area of the composition candidate viewed from the imaging device 11-2 to the output composition determination unit 35-2.

The output composition determination unit 35-1 and the time-series smoothing unit 36-1 perform the processing described above with reference to Fig. 3 based on the composition candidate information supplied from the part-containing area generation unit 34 and outputs time-series smoothed composition information indicating the time-series smoothed composition to the output video processing unit 37. The output composition determination unit 35-2 and the time-series smoothing unit 36-2 perform the processing described above with reference to Fig. 3 based on the composition candidate information supplied from the part-containing area 3D correction unit 232 and outputs time-series smoothed composition information indicating the time-series smoothed composition to the PTZ control calculation unit 233.

The PTZ control calculation unit 233 performs calculation for converting the time-series smoothed composition information supplied from the time-series smoothing unit 36-2 to the composition candidate information for controlling the PTZ mechanism based on the composition candidate information supplied from the video imaging device 11-2. The PTZ control calculation unit 233 outputs the camera control information obtained as a result of the calculation to the video imaging device 11-2.

As described above, by performing 3D correction on the part-containing area of the composition candidate generated based on the input image supplied from one video imaging device 11-1, it is possible to obtain the output composition of the output image output by the other video imaging device 11-2.

In addition, the input images obtained from a plurality of video imaging devices 11 can be output in an appropriate composition by a single computing device 211.

### <Second configuration of computing device>

Fig. 25 is a block diagram showing a second functional configuration example of the computing device 211.

In Fig. 25, the computing device 211 includes an input video conversion unit 31, a posture estimation unit 32, a subject tracking unit 33, and a part-containing area generation unit 34. The computing device 211 includes output composition determination units 35-1 and 35-2, time-series smoothing units 36-1 and 36-2, an output video processing unit 37, a part-containing area 3D correction unit 232, a PTZ control calculation unit 233, and a calibration information storage unit 251.

In Fig. 25, parts corresponding to those in Figs. 3 and 23 are denoted by the same reference numerals.

In the computing device 211 of Fig. 23, the three-dimensional skeleton position is calculated by applying the two-dimensional skeleton coordinates obtained from the input images supplied from the video imaging device 11 to the camera calibration technique.

In the computing device 211 of Fig. 25, the two-dimensional skeleton coordinates of each video imaging device 11 measured in advance are stored in the calibration information storage unit 251 as calibration information. The part-containing area 3D correction unit 232 in Fig. 25 applies the calibration information stored in the calibration information storage unit 251 to the camera calibration technique to correct the composition candidate information indicating the coordinates of the part-containing area of the composition candidate viewed from the video imaging device 11-1 to the composition candidate information indicating the coordinates of the part-containing area of the composition candidate viewed from the video imaging device 11-2.

As a result, the computing device 211 in Fig. 5 only needs to process the image from the video imaging device 11-1. Therefore, the input video conversion unit 31 through the subject tracking unit 33 may be provided one by one, and the calculation time for acquiring the two-dimensional skeleton coordinates can be shortened.

However, the computing device 211 of Fig. 23 has the advantage that it requires less time and effort than the computing device 211 of Fig. 25 in that it requires time and effort to measure in advance, and the imaging device cannot be moved after measurement.

### <3. Others>

### <Effect>

As described above, in the present technology, based on the output aspect ratio of the output image and the predetermined part aspect ratio of the predetermined part-containing area including the predetermined part of the subject determined based on the input image, it is determined whether the predetermined part composition candidate corresponding to the predetermined part is to be set as the output composition of the output image.

In this way, an appropriate composition can be generated.

### <Configuration example of computer>

The above-described series of processing can also be executed by hardware or software. When the series of processing is performed by software, a program for the software is embedded in dedicated hardware to be installed from a program recording medium to a computer or a general-purpose personal computer.

Fig. 26 is a block diagram showing a configuration example of computer hardware that executes the above-described series of processing using a program.

A CPU 301, a ROM (Read Only Memory) 302 and a RAM 303 are interconnected by a bus 304.

An input/output interface 305 is further connected to the bus 304. An input unit 306 including a keyboard or a mouse and an output unit 307 including a display or a speaker are connected to the input/output interface 305. In addition, a storage unit 308 including a hard disk or a nonvolatile memory, a communication unit 309 including a network interface, a drive 310 driving a removable medium 311 are connected to the input/output interface 305.

In the computer configured as described above, for example, the CPU 301 loads a program stored in the storage unit 308 onto the RAM 303 via the input/output interface 305 and the bus 304 and executes the program to perform the series of processing steps described above.

For example, the program executed by the CPU 301 is recorded on the removable medium 311 or provided via a wired or wireless transfer medium such as a local area network, the Internet, or a digital broadcast to be installed in the storage unit 308.

Note that the program executed by a computer may be a program that performs processing chronologically in the order described in the present specification or may be a program that performs processing in parallel or at a necessary timing such as a called time.

Meanwhile, in the present specification, a system is a collection of a plurality of constituent elements (devices, modules (components), or the like) and all the constituent elements may be located or not located in the same casing. Thus, a plurality of devices housed in separate housings and connected via a network, and one device in which a plurality of modules are housed in one housing are both systems.

In addition, the advantages described in the present specification are merely exemplary and not limited, and other advantages may be obtained.

The embodiments of the present technology are not limited to the aforementioned embodiments, and various changes can be made without departing from the gist of the present technology.

For example, the present technology can be configured as cloud computing in which one function is shared and processed in common by a plurality of devices via a network.

In addition, each step described in the above flowchart can be executed by one device or executed in a shared manner by a plurality of devices.

Furthermore, in a case in which one step includes a plurality of processes, the plurality of processes included in the one step can be executed by one device or executed in a shared manner by a plurality of devices.

### <Combination example of configuration>

The present technology can also have the following configuration.
(1) An information processing device including:
   a composition determination unit that determines, based on an output aspect ratio of an output image and a predetermined part aspect ratio of a predetermined part-containing area of a predetermined part of a subject determined based on an input image, whether a predetermined part composition candidate corresponding to the predetermined part is to be set as an output composition of the output image.
(2) The information processing device according to (1), wherein
   when there are a plurality of the subjects, the predetermined part-containing area is an area including the predetermined part of each of the subjects.
(3) The information processing device according to (1) or (2), wherein
   the predetermined part composition candidate includes the predetermined part-containing area.
(4) The information processing device according to any one of (1) to (3), wherein
   the composition determination unit determines the predetermined part composition candidate as the output composition based on comparison between the output aspect ratio and the predetermined part aspect ratio.
(5) The information processing device according to any one of (1) to (4), wherein
   the composition determination unit determines that the predetermined part composition candidate is to be set as the output composition when there is no other composition candidate in which a part aspect ratio of a part-containing area including a part corresponding to a composition candidate is vertically longer than the output aspect ratio.
(6) The information processing device any one of (1) to (4), wherein
   when the predetermined part composition candidate is not determined as the output composition, the composition determination unit determines that another composition candidate in which the part aspect ratio of the part-containing area including a part corresponding to the composition candidate is vertically longer than the output aspect ratio or another composition candidate in which the part aspect ratio is closer to the output aspect ratio is to be set as the output composition.
(7) The information processing device according to (6), wherein
   the other composition candidate is one of composition candidates set to be usable by a user.
(8) The information processing device according to any one of (1) to (4), wherein when the predetermined part composition candidate is not determined as the output composition, the composition determination unit changes the subject of the predetermined part to be included in the predetermined part-containing area.
(9) The information processing device according to any one of (1) to (4), wherein when the predetermined part composition candidate is not determined as the output composition, the composition determination unit determines that a composition candidate corresponding to a first part including the predetermined part or a composition candidate corresponding to a second part including the predetermined part is to be set as the output composition.
(10) The information processing device according to any one of (1) to (9), wherein
   the predetermined part composition candidate is a default composition candidate.
(11) The information processing device according to (10), wherein
   the predetermined part composition candidate is the default composition candidate set by user selection or metadata at a time of imaging.
(12) The information processing device according to (10), wherein
   the predetermined part composition candidate is the default composition candidate set based on a detected state of the subject.
(13) The information processing device according to any one of (1) to (12), wherein the composition determination unit generates an output composition area of the output composition by correcting the predetermined part-containing area corresponding to the predetermined part composition candidate determined to be set as the output composition so as to have the output aspect ratio.
(14) The information processing device according to (13), wherein
   the correcting involves adding top and bottom margins or left and right margins to the predetermined part-containing area or adjustment of sizes of the predetermined part-containing area and the other predetermined part-containing area.
(15) The information processing device according to (13), wherein
   when the output composition area protrudes from the input image, the composition determination unit determines that the other composition candidate having a narrower angle of view than the predetermined part composition candidate determined to be set as the output composition is to be set as the output composition.
(16) The information processing device according to (15), wherein
   the composition determination unit adjusts a position of the output composition area so as not to protrude from the input image when there is no other composition candidate.
(17) The information processing device according to any one of (1) to (16), wherein when at least one part of the subject included in the predetermined part-containing area is not detected and there is no predetermined part composition candidate for determining the output composition, the composition determination unit determines that a composition candidate corresponding to at least one predicted part predicted from a positional relationship of detected parts of the subject is to be set as the output composition.
(18) The information processing device according to (17), wherein
   the composition determination unit determines the predicted composition candidate as the output composition when the predetermined part composition candidate is not generated for a certain period of time and a deviation between the previous output composition and the predicted composition candidate is larger than a predetermined threshold.
(19) The information processing device according to any one of (1) to (18), wherein the predetermined part composition candidate includes an object detection result detected from the input image.
(20) The information processing device according to any one of (1) to (19), further including:
   an image output unit that crops the input image based on the output composition and generates the output image.
(21) The information processing device according to any one of (1) to (20), further including:
   a camera control information calculation unit that converts the output composition to camera control information of an imaging device that supplies the input image.
(22) The information processing device according to any one of (1) to (21), further including:
   a composition candidate correction unit that corrects coordinates of the predetermined part-containing area of the predetermined part composition candidate based on camera calibration information of an imaging device that supplies the input image and another imaging device that is different from the imaging device, wherein
   the composition determination unit determines whether the predetermined part composition candidate is to be set as the output composition of the output image of the other imaging device based on the output aspect ratio and the predetermined part aspect ratio of the predetermined part-containing area whose coordinates are corrected.
(23) The information processing device according to (22), further including:
   a matching unit that performs camera calibration based on the input image and another input image supplied from the other imaging device to generate the camera calibration information.
(24) The information processing device according to (22), further including:
   a storage unit that stores the camera calibration information in advance.
(25) An information processing method for allowing an information processing device to execute:
   determining, based on an output aspect ratio of an output image and a predetermined part aspect ratio of a predetermined part-containing area of a predetermined part of a subject determined based on an input image, whether a predetermined part composition candidate corresponding to the predetermined part is to be set as an output composition of the output image.
(26) A program for causing a computer to function as:
   a composition determination unit that determines, based on an output aspect ratio of an output image and a predetermined part aspect ratio of a predetermined part-containing area of a predetermined part of a subject determined based on an input image, whether a predetermined part composition candidate corresponding to the predetermined part is to be set as an output composition of the output image.

### [Reference Signs List]

1 Imaging system
11, 11-1, 11-2 Video imaging device
12 Computing device
13 Video processing device
31, 31-1, 31-2 Input video conversion unit
32, 32-1, 21-2 Posture estimation unit
33, 33-1, 33-2 Subject tracking unit
34 Part-containing area generation unit
35, 35-1, 35-2 Output composition determination unit
36, 36-1, 36-2 Time-series smoothing unit
37 Output video processing unit
211 Computing device
231 3D matching unit
232 Part-containing area 3D correction unit
233 PTZ control calculation unit
251 Calibration information storage unit

## Claims

1. An information processing device comprising:
a composition determination unit that determines, based on an output aspect ratio of an output image and a predetermined part aspect ratio of a predetermined part-containing area including a predetermined part of a subject determined based on an input image, whether a predetermined part composition candidate corresponding to the predetermined part is to be set as an output composition of the output image.

2. The information processing device according to claim 1, wherein
when there are a plurality of the subjects, the predetermined part-containing area is an area including the predetermined part of each of the subjects.

3. The information processing device according to claim 1, wherein
the predetermined part composition candidate includes the predetermined part-containing area.

4. The information processing device according to claim 1, wherein
the composition determination unit determines the predetermined part composition candidate as the output composition based on comparison between the output aspect ratio and the predetermined part aspect ratio.

5. The information processing device according to claim 1, wherein
the composition determination unit determines that the predetermined part composition candidate is to be set as the output composition when there is no other composition candidate in which a part aspect ratio of a part-containing area including a part corresponding to a composition candidate is vertically longer than the output aspect ratio.

6. The information processing device according to claim 1, wherein
when the predetermined part composition candidate is not determined as the output composition, the composition determination unit determines that another composition candidate in which the part aspect ratio of the part-containing area including a part corresponding to the composition candidate is vertically longer than the output aspect ratio or another composition candidate in which the part aspect ratio is closer to the output aspect ratio is to be set as the output composition.

7. The information processing device according to claim 1, wherein
when the predetermined part composition candidate is not determined as the output composition, the composition determination unit changes the subject of the predetermined part to be included in the predetermined part-containing area.

8. The information processing device according to claim 1, wherein
when the predetermined part composition candidate is not determined as the output composition, the composition determination unit determines that a composition candidate corresponding to a first part including the predetermined part or a composition candidate corresponding to a second part including the predetermined part is to be set as the output composition.

9. The information processing device according to claim 1, wherein
the predetermined part composition candidate is a default composition candidate.

10. The information processing device according to claim 9, wherein
the predetermined part composition candidate is the default composition candidate set by user selection or metadata at a time of imaging.

11. The information processing device according to claim 9, wherein
the predetermined part composition candidate is the default composition candidate set based on a detected state of the subject.

12. The information processing device according to claim 1, wherein
the composition determination unit generates an output composition area of the output composition by correcting the predetermined part-containing area corresponding to the predetermined part composition candidate determined to be set as the output composition so as to have the output aspect ratio.

13. The information processing device according to claim 12, wherein
when the output composition area protrudes from the input image, the composition determination unit determines that the other composition candidate having a narrower angle of view than the predetermined part composition candidate determined to be set as the output composition is to be set as the output composition.

14. The information processing device according to claim 13, wherein
the composition determination unit adjusts a position of the output composition area so as not to protrude from the input image when there is no other composition candidate.

15. The information processing device according to claim 1, wherein
when at least one part of the subject included in the predetermined part-containing area is not detected and there is no predetermined part composition candidate for determining the output composition, the composition determination unit determines that a composition candidate corresponding to at least one predicted part predicted from a positional relationship of detected parts of the subject is to be set as the output composition.

16. The information processing device according to claim 1, further comprising:
an image output unit that crops the input image based on the output composition and generates the output image.

17. The information processing device according to claim 1, further comprising:
a camera control information calculation unit that converts the output composition to camera control information of an imaging device that supplies the input image.

18. The information processing device according to claim 1, further comprising:
a composition candidate correction unit that corrects coordinates of the predetermined part-containing area of the predetermined part composition candidate based on camera calibration information of an imaging device that supplies the input image and another imaging device that is different from the imaging device, wherein
the composition determination unit determines whether the predetermined part composition candidate is to be set as the output composition of the output image of the other imaging device based on the output aspect ratio and the predetermined part aspect ratio of the predetermined part-containing area whose coordinates are corrected.

19. An information processing method for allowing an information processing device to execute:
determining, based on an output aspect ratio of an output image and a predetermined part aspect ratio of a predetermined part-containing area including a predetermined part of a subject determined based on an input image, whether a predetermined part composition candidate corresponding to the predetermined part is to be set as an output composition of the output image.

20. A program for causing a computer to function as:
a composition determination unit that determines, based on an output aspect ratio of an output image and a predetermined part aspect ratio of a predetermined part-containing area including a predetermined part of a subject determined based on an input image, whether a predetermined part composition candidate corresponding to the predetermined part is to be set as an output composition of the output image.
